# EUROPÄISCHE PATENTSCHRIFT

(11) **EP 3 500 208 B1**
(45) Veröffentlichungstag und Bekanntmachung des Hinweises auf die Patenterteilung: **23.10.2024**
(21) Anmeldenummer: 17764762.5
(22) Anmeldetag: 17.08.2017
(51) Int. Cl.: A61C 8/00

(54) **DENTAL-PROTHETIKSYSTEM**
DENTAL PROSTHESIS SYSTEM
SYSTÈME DE PROTHÈSE DENTAIRE

(30) Priorität: 17.08.2016 DE 102016215427
(43) Veröffentlichungstag der Anmeldung: 26.06.2019
(73) Patentinhaber: Zipprich, Holger, 64342 Malchen (DE)
(72) Erfinder: Zipprich, Holger, 64342 Malchen (DE)
(74) Vertreter: Tergau & Walkenhorst Intellectual Property GmbH
(86) Internationale Anmeldenummer: PCT/EP2017/070885
(87) Internationale Veröffentlichungsnummer: WO 2018/033608

(56) Entgegenhaltungen:
- WO-A1-2011/138029
- WO-A1-2011/138029
- DE-A1- 102008 009 547
- DE-A1- 102008 009 547
- DE-T5- 112012 001 947
- DE-U1- 29 606 593
- DE-U1- 9 202 396
- DE-U1- 9 202 396
- JP-A- H06 178 784
- JP-A- H06 178 784
- KR-A- 20060 025 263
- US-A- 5 873 721
- US-A1- 2007 037 123
- US-A1- 2007 037 123
- US-A1- 2012 196 250
- US-A1- 2012 196 250

## Beschreibung

Die Erfindung betrifft ein Dental-Prothetiksystem mit einem in den Kieferknochen eines Patienten inserierbaren Dentalimplantat und mit einer auf das Dentalimplantat aufsetzbaren prothetischen Konstruktion.

Dental-Prothetiksysteme sind beispielsweise aus KR 2006 0025263 A bekannt.

Dental-Prothetiksysteme können im Rahmen der rekonstruktiven Therapie zum Ausgleich des Verlusts eines Zahnes zum Einsatz kommen. Ein solches Prothetiksystem umfasst üblicherweise ein Dentalimplantat, das üblicherweise anstelle eines extrahierten oder ausgefallenen Zahnes in den Kieferknochen eingesetzt wird. Nach einer Einheilphase von etwa vier bis zwölf Wochen wird sodann ein als Zahnersatz dienendes prothetisches Teil oder eine Krone als prothetische Konstruktion auf das Dentalimplantat aufgesetzt und dort fixiert. Dazu ist ein derartiges Dentalimplantat üblicherweise als geeignet geformter Metallkörper ausgebildet, der durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Im Gegensatz zu einteiligen Dentalimplantaten, bei denen die als Zahnersatz dienende Prothetik unmittelbar an dem in den Kieferknochen eingeschraubten Metallkörper angebracht wird, sind auch zwei- oder mehrteilige Implantatsysteme bekannt und weit verbreitet. In einem solchen mehrteiligen Dentalimplantatsystem ist zusätzlich zu dem eigentlichen, in den Kieferknochen des Patienten einzuschraubenden Dentalimplantat in der Art eines Verbindungs- oder Übergangsstücks ein so genanntes Aufbauteil oder Abutment vorgesehen, das die als Zahnersatz vorgesehene Prothetik oder Krone trägt. Nach erfolgter Einheilung des eigentlichen Dentalimplantats in den Kieferknochen des Patienten wird in der Art einer Fertigstellung des Dental-Prothetiksystems das mit der Prothetik versehene Abutment auf das Dentalimplantat aufgesetzt und mit diesem verbunden.

Die Herstellung einer solchen Verbindung des zur Anbringung der Prothetik vorgesehenen Abutments mit dem inserierten Dentalimplantat erfolgt üblicherweise mittels einer Schraubverbindung. Zur Sicherstellung einer im Hinblick auf die zu erwartenden Kaubelastungen ausreichend hohen mechanischen Stabilität des Gesamtsystems ist dabei das Abutment üblicherweise mit einem Verbindungszapfen versehen, der in der Art einer Steckverbindung in einen zugeordneten Aufnahmekanal im Dentalimplantat einbringbar ist und in montiertem Zustand eine laterale und ggf. auch axiale Führung und fixierte Positionierung der Komponenten zueinander sicherstellt. In diesen Verbindungszapfen ist üblicherweise ein Schraubenkanal für eine zur Verbindung des Abutments mit dem Dentalimplantat vorgesehene Verbindungsschraube integriert. Die Verbindungsschraube durchdringt dabei den Schraubenkanal und greift mit ihrem Außengewinde in ein korrespondierendes Innengewinde im Dentalimplantat ein. Der Schraubenkopf der Verbindungsschraube liegt dabei auf einer außerhalb des Schraubenkanals angeordneten Stirnsenkung im Abutment auf und presst über diese das Aufbauteil beim Einschrauben der Verbindungsschraube auf das Pfostenteil.

Die Anbringung der eigentlichen Prothetik oder des Zahnersatzes erfolgt üblicherweise an einem hierfür vorgesehenen, am Grundkörper des Abutments angeformten Montagezapfen. Je nach Bauweise des Implantatsystems kann die Prothetik an diesen angeklebt oder auf sonstige Weise stoffschlüssig befestigt werden; alternativ sind aber auch Schraubsysteme im Einsatz, bei denen die Befestigung der Prothetik mit einer Verbindungsschraube erfolgt. Diese greift dann in ein im Montagezapfen angeordnetes Gewinde ein. Der Platzbedarf für die Unterbringung dieses Gewindes bedingt jedoch eine Reduzierung der Materialstärke in diesem Bereich, was zu einer unerwünschten Schwächung und Beeinträchtigung der mechanischen Festigkeit des Systems führen könnte. In jedem Fall ist den genannten Systemen gemeinsam, dass bedingt durch den zur lateralen und axialen zuverlässigen Fixierung gerade im Hinblick auf die vergleichsweise hohen Kaubelastungen erforderlichen Montagezapfen für die Prothetik eine gewisse Bauhöhe in Kauf genommen werden muss, die wiederum die Flexibilität bei der Planung und der Anpassung der Prothetik an die Mundsituation einschränkt.

Der Erfindung liegt daher die Aufgabe zugrunde, ein Dental-Prothetiksystem der oben genannten Art anzugeben, das selbst bei hoher mechanischer Belastbarkeit eine hohe Flexibilität beim Einsatz und gerade auch bei der Anpassung der Prothetik an die Mundsituation des Patienten aufweist. Des Weiteren soll eine zur Verwendung in einem solchen Dental-Prothetiksystem besonders geeignete prothetische Konstruktion angegeben werden, welche jedoch nicht Teil der beanspruchten Erfindung ist.

Die Aufgabe wird erfindungsgemäß durch ein Dental-Prothetiksystem gemäß Anspruch 1 gelöst.

Unter "korrespondierend" ist im Zusammenhang mit der Führungspaarung insbesondere zu verstehen, dass die Komponenten "Führungsrippe" einerseits und "Führungsnut" andererseits räumlich/geometrisch, also hinsichtlich Kontur und Dimensionierung aneinander angepasst sind, so dass die Führungsrippe in die korrespondierende Führungsnut vergleichbar zu einer Nut-Feder-Verbindung eingelegt und ggf. in Formschluss gebracht werden kann.

Die Erfindung geht dabei von der Überlegung aus, dass eine besonders hohe Flexibilität, gerade im Hinblick auf Einsetzbarkeit, Einsatzplanung, aber auch Anpassung und Individualisierung im Patientenmund, erreichbar ist, indem die gesamte Bauhöhe, insbesondere aber die Systemhöhe oberhalb des Gewebes (oberhalb "tissue level"), konsequent gering gehalten wird. Um dies zu ermöglichen, sollte daher von dem an das Dentalimplantat oder an dessen Abutment üblicherweise abgeformten, zur Anbringung der Prothetik vorgesehenen Montagezapfen möglichst abgesehen oder dessen Bauhöhe weitgehend reduziert werden. Dies ist aber im Sinne einer langen Lebensdauer des prothetischen Systems und gerade im Hinblick auf die zu erwartenden, in Folge der Kaubelastungen in das System eingeleiteten teilweise erheblichen Kräfte nur möglich, indem geeignete Maßnahmen zur gezielten Aufnahme dieser Kräfte ergriffen werden.

Um dies zu ermöglichen, ist nunmehr vorgesehen, gezielt die oberhalb des Gewebelevels üblicherweise vergrößerte "freie Breite" im Bereich der Stirnseite des inserierten Dentalimplantats zur Krafteinleitung und -übertragung zu nutzen. Unter Verzicht auf einen direkt hierfür vorgesehenen Montagezapfen soll dabei das Dentalimplantat mit seiner Stirnseite die Auflagefläche für die prothetische Konstruktion bilden, auf die diese mit ihrer Basisfläche aufgesetzt werden kann. Diese Auflagefläche sollte für eine vereinfachte spätere Handhabung oberhalb des Gewebes, also oberhalb des "tissue levels", positioniert sein. Bei einer derartigen Bauweise sollte aber in besonderem Maße berücksichtigt werden, dass die zu erwartenden Belastungen nicht nur axiale Komponenten aufweisen, die durch die Auflagefläche als solche bereits gut kompensierbar sind. Zusätzlich ist vielmehr auch mit Kraftkomponenten in lateraler oder seitlicher Richtung zu rechnen. Um diese geeignet und mit hoher Systemstabilität einleiten zu können, sollte der Kontaktbereich zwischen prothetischer Konstruktion und inseriertem Dentalimplantat mit geeigneten mechanischen Modifikationen versehen sein, die gerade für die lateralen Kraftkomponenten eine zuverlässige und belastbare Einleitung ermöglichen. Hierzu ist ein System aus Führungsrippen und korrespondierenden Nuten vorgesehen, die jeweils paarweise in der Art einer Verzahnung oder vergleichbar mit einem Nut-Feder-System die entsprechenden Kraftkomponenten einleiten können, bevorzugt dabei sowohl für Druck- als auch für Zugkräfte, und/ oder in positiver und negativer Raumrichtung.

Sowohl das Dentalimplantat als auch die auf dieses aufsetzbare prothetische Konstruktion können dabei, je nach individueller Auslegung, ihrerseits jeweils ein- oder mehrteilig ausgeführt sein. Beispielsweise könnte das Dentalimplantat in der Art eines einteiligen Implantats mit unmittelbar die Auflagefläche für die prothetische Konstruktion bildender Stirnseite ausgeführt sein, oder es könnte in einer anderen beispielhaften Ausgestaltung auch - entsprechend üblichen zweiteiligen Implantaten - zweiteilig ausgeführt sein und neben dem eigentlichen, in den Knochen zu inserierenden ersten Implantatteil ein zweites, auf dieses aufsetzbares Implantatteil umfassen. Im Unterschied zu herkömmlichen Abutments würde ein solches zweites Implantatteil anstelle des genannten Montagezapfens nunmehr jedoch eine vorteilhafterweise vergleichsweise flach ausgeführte, mit den genannten Kontakt- und Führungselementen versehene Trägerfläche für die Prothetik aufweisen und damit die Funktion eines Plattformteils für die Anbringung der Prothetik abbilden. Analog könnte die prothetische Konstruktion ihrerseits einteilig ausgeführt sein und unmittelbar den gewünschten Zahnersatz bilden. Alternativ könnte die prothetische Konstruktion ihrerseits aber auch zwei- oder mehrteilig ausgeführt sein und insbesondere ein zentrales, die Basisfläche für die Auflage auf das Dentalimplantat bildende Trägerteil und ein auf diesem angeordnetes, die eigentliche Prothetik bildendes Prothetikteil umfassen. Eine solche Ausgestaltung, bei der das zentrale Trägerteil für die Prothetik die Funktion des bisher üblichen Abutments übernehmen könnte, im Gegensatz zu einem herkömmlichen Abutment aber zum Dentalimplantat hin mit einer vorteilhafterweise vergleichsweise flach ausgeführten, mit den genannten Kontakt- und Führungselementen versehenen Basisfläche versehen sein könnte, ist besonders vorteilhaft im Hinblick auf die Materialwahl für die genannten Komponenten. Hierdurch ist nämlich eine unterschiedliche Materialwahl für das Trägerteil einerseits (beispielsweise Titan) und das eigentliche Prothetikteil (beispielsweise Keramik) möglich.

In vorteilhafter Weiterbildung sind die vom Dentalimplantat stirnseitig gebildete Auflagefläche und korrespondierend dazu die Basisfläche der prothetischen Konstruktion im Wesentlichen plan, besonders bevorzugt vollständig plan ausgeführt. Dies erlaubt bei aufgesetzter Prothetik auf besonders einfache Weise einen flächigen Kraftschluss bei insgesamt besonders niedrig gehaltener Bauhöhe des Systems. Die Auflagefläche kann dabei mit ihrer Flächennormalen schräg oder verkippt zur Längsachse des Dentalimplantats ausgerichtet sein, so dass die Anbringung einer in Relation zur Längsachse des Dentalimplantats verkippten oder abgewinkelten Prothetik begünstigt ist. Vorteilhafterweise ist die Auflagefläche mit ihrer Flächennormalen aber im Wesentlichen parallel zur Längsachse des Dentalimplantats ausgerichtet, so dass aufgrund der damit erreichbaren rotatorischen Freiheitsgrade bei der Montage auf besonders einfache Weise eine individualisierte Anpassung an die Mundsituation des Patienten erfolgen kann.

Die Führungsrippen und entsprechend die zugeordneten Führungsnuten können in der Art einzelner, separater Formelemente an der jeweiligen Fläche angeformt bzw. in diese eingearbeitet sein. Eine besonders gleichmäßige und damit zuverlässige Einleitung auch verschiedenartiger Kräfte in das Dentalimplantat, wie es bei den möglicherweise auftretenden Kaubelastungen zu erwarten ist, ist aber erreichbar, indem in besonders vorteilhafter Ausgestaltung die oder eine der Führungsrippen in der Art einer Ringwulst und entsprechend die ihr zugeordnete Führungsnut mit einer umlaufenden, in sich geschlossenen Kontur ausgeführt sind. Bei einer solchen umlaufenden Kontur ist die zuverlässige Aufnahme von Kaubelastungen unabhängig von der ursprünglichen Kraftrichtung zuverlässig möglich. Zudem bietet eine solche, vollständig umlaufende Kontur den erheblichen Vorteil, dass sie eine zusätzliche Dichtfläche zur Abdichtung des umschlossenen Innenraums beispielsweise gegenüber Bakterien oder Verunreinigungen bereitstellen kann. Insbesondere bei abgewinkelten Konstruktionen, bei denen die Auflagefläche relativ zur Längsachse des Dentalimplantats geneigt ist, kann eine solche umlaufende, eigentlich durchgängige Kontur bedarfsabhängig aber auch mit Unterbrechungen versehen sein, beispeilsweise um ausreichend Platz für einen eventuell notwendigen Schraubenkanal für eine Verbindungsschraube zu bilden.

In weiterer vorteilhafter Ausgestaltung bilden die in der Art einer Ringwulst mit einer umlaufenden, in sich geschlossenen Kontur ausgeführte Führungsrippe und entsprechend die ihr zugeordnete Führungsnut bezogen auf die Längsachse des Dentalimplantats eine nicht runde, besonders bevorzugt eine ovale oder triovale, Querschnittskontur. Insbesondere kann dabei die Konturierung angepasst an eine entsprechende Außenkontur des Dentalimplantats in dessen Verbindungsbereich gewählt sein. Hierfür werden insbesondere Konturen als besonders vorteilhaft angesehen, die - je nach Einsatzzweck und spezifischer Insertionsstelle - die typische Außenkontur eines Zahns im Bereich der Einsatzstelle nachahmen, also beispielsweise eine ovale, triovale oder quadovale Kontur für Zähne im Frontzahn- bzw. Backenzahnbereich.

Durch eine solche nicht runde Ausgestaltung der Kontur kann das entsprechende Führungspaar zudem zusätzlich zu seiner eigentlichen Funktion, nämlich der geeigneten Krafteinleitung, auch noch die Funktionalität einer Indexierung abbilden, bei der die Montage der prothetischen Konstruktion ausschließlich in denjenigen rotatorischen Ausrichtungen möglich ist, in denen die jeweilige Führungsrippe passend zur zugeordneten Führungsnut rotatorisch ausgerichtet ist. Eine derartige Indexierung kann in einer als vorteilhaft angesehenen Variante bereitgestellt werden, indem die jeweilige Führungsrippe (und entsprechend die zugeordnete Führungsnut) in Draufsicht gesehen als umlaufendes Band mit annähernd gleichbleibender Breite ausgeführt ist, dessen Kontur in Draufsicht die genannte nicht runde, vorzugsweise triovale oder quadovale, Form aufweist. In einer alternativen vorteilhaften Ausgestaltung kann die jeweilige Führungsrippe (und entsprechend die zugeordnete Führungsnut) in Draufsicht gesehen aber auch als umlaufendes Band mit unterschiedlich konturierten Seitenrändern ausgeführt sein, wobei beispielsweise einer der Seitenränder in Draufsicht eine runde Kontur einnimmt und die Indizierung über den anderen, beispielsweise in Draufsicht in der Art einer Ellipse, eines Ovals. Triovals oder Quadovals geformten Seitenrand erfolgt.

Andererseits kann für das Dentalimplantat auch ein runder Außenquerschnitt und/oder für das umlaufende Führungspaar eine runde oder kreisförmige Außenkontur gewählt sein; eine solche Auslegung ist insbesondere bei Anwendungen für Brücken oder andere mehrgliedrige Prothetik günstig, bei der eine Mehrzahl von Zähnen mit einem einzigen Element versorgt bzw. ersetzt wird.

Das Dentalimplantat kann im Hinblick auf ein besonders günstiges Einwachsverhalten in den Kieferknochen (so genannte Osseointegration) einen nicht runden, vorzugsweise triovalen, Querschnitt aufweisen. In einem solchen Fall ist in ganz besonders bevorzugter Ausgestaltung eine Führungsrippe (und entsprechend eine zugeordnete Führungsnut) vorgesehen, die in Draufsicht gesehen ein umlaufendes Band bildet, dessen äußerer Seitenrand entsprechend der Außenkontur oder des Außenquerschnitts des Dentalimplantats ausgestaltet und konturiert ist. Damit ist in allen Fällen eine annähernde gleichbleibende Materialstärke und somit Belastbarkeit des Systems in allen Querrichtung zur Längsachse des Dentalimplantats möglich, und Schwachstellen können vermieden werden.

Um die zu erwartenden unterschiedlichen Druck- und Zugkräfte in Folge der zu erwartenden Kaubelastung geeignet zu kompensieren, weist vorteilhafterweise die oder eine der Führungsrippen ein Rippenprofil mit unterschiedlichen Flankenwinkeln auf. Dabei ist bevorzugt der Flankenwinkel der außen positionierten Flanke kleiner als der der innen positionierten Flanke. In zusätzlicher oder alternativer vorteilhafter Weiterbildung ist das Rippenprofil der oder jeder Führungsrippe mit einer oder zwei bauchigen Flanken ausgeführt.

Um die Montagefreundlichkeit zu erhöhen und insbesondere die Anpassung der Prothetik an die Mundsituation des Patienten besonders zu erleichtern, ist die Verbindung zwischen prothetischer Konstruktion und Dentalimplantat in ganz besonders bevorzugter Weiterbildung mit einer zusätzlichen Justier-Führungspaarung versehen. Dazu ist vorteilhafterweise die eine der Auflage- und der Basisfläche mit einem angeformten, bezüglich der Längsachse des Dentalimplantats rotationssysmmetrischen Justierkragen mit einer Kragenhöhe von mehr als der größten Höhe der Führungsrippen versehen, wobei die jeweils andere Fläche eine korrespondierende eingebrachte Aufnahme oder Justiernut umfasst. Als besonders bevorzugte Höhen sind dabei für die Führungsrippen eine Höhe von mindestens 0,1 mm und höchstens 1,5 mm, besonders bevorzugt von mindestens 0,3 mm und höchstens 0,9 mm, und für den Justierkragen eine Höhe von mindestens 0,3 mm und höchstens 2,5 mm, besonders bevorzugt von mindestens 0,5 mm und höchstens 1,5 mm, vorgesehen.

Durch eine solche Ausgestaltung kann die Endmontage, also die Anbringung der prothetischen Komponente am Dentalimplantat, ganz besonders vereinfacht werden. Beim Aufsetzen der prothetischen Komponente auf das Dentalimplantat kann nämlich zunächst der Justierkragen mit der zugehörigen Ausnehmung oder Justiernut in Eingriff gebracht werden. Dabei ist die oder sind die weiteren angeformten Führungsrippen aufgrund ihrer im Vergleich zum Justierkragen geringeren Bauhöhe nicht störend, so dass durch das Einbringen des Justierkragens in die Justiernut zunächst auf vergleichsweise einfache Weise, und für den Anwender ohne notwendigen Sichtkontakt, die korrekte laterale Position der prothetischen Konstruktion relativ zum Dentalimplantat ermittelt werden kann. Aufgrund der bevorzugt runden Außenkontur des Justierkragens und der entsprechenden, bevorzugt ebenfalls runden Innenkontur der Ausnehmung oder Justiernut kann sodann unter Beibehaltung der durch den schon in teilweisem Eingriff befindlichen Justierkragen korrekten lateralen Positionierung durch Rotation die korrekte rotatorische Ausrichtung der prothetischen Komponente ermittelt werden. Diese ist dann erreicht, wenn die weitere Führungsrippe oder die weiteren Führungsgrippen in korrekte Überlappung mit den jeweils zugeordneten Führungsnuten gebracht werden. In diesem Fall können auch diese in Eingriff gebracht werden, und die prothetische Konstruktion kann mit ihrer Basisfläche bis zum Anschlag mit der Auflagefläche des Dentalimplantats in Kontakt gebracht werden.

Durch diese Bauweise ist es somit möglich, zwei wesentliche Funktionalitäten, die die Endmontage des Prothetiksystems bedeutend erleichtern, nämlich einerseits die laterale Positionsfindung beim Zusammenfügen der Bauteile und andererseits die korrekte rotatorische Ausrichtung relativ zueinander, in einem gemeinsamen Höhenbereich, nämlich unmittelbar im Höhenbereich der durch die Auflagefläche des Dentalimplantats und die auf dieser aufliegende Basisfläche der Prothetik definierten Verbindung, zu realisieren. Damit ist sowohl ein besonders wirksames Zusammenwirken der Komponenten als auch eine insgesamt sehr niedrige Bauhöhe erreichbar. Besonders vorteilhaft ist dabei auch, wenn die zur Positionierungsfindung vorgesehene Justierpaarung vergleichsweise innen, also nah zur Zentralachse des Systems positioniert und nach außen hin von der oder den Führungspaarungen umgeben ist. Damit kann die Bauhöhe der einzelnen Komponenten im äußeren Bereich vergleichsweise niedrig gehalten werden, wohingegen die vergleichsweise größere Bauhöhe der Elemente der Justierpaaung auf den zentralen Raumbereich begrenzt ist.

Eine besonders einfache Bauweise ist dabei erreichbar, indem das Dentalimplantat in vorteilhafter Ausgestaltung einen zentralen Aufnahmekanal für eine Verbindungsschraube aufweist, wobei der Justierkragen bzw. die korrespondierende Justiernut unmittelbar um die stirnseitige Zugangsöffnung des Aufnahmekanals umlaufend angeordnet ist.

In weiterer besonders bevorzugter Ausgestaltung, die als eigenständig erfinderisch angesehen wird, ist das Dental-Prothetiksystem, dabei ganz besonders bevorzugt das System aus Führungsnut und Führungsrippe und/oder die Justier-Führungspaarung, mit einem Rastsystem ausgerüstet. Damit ist auf besonders einfache Weise ein mehrfaches Anbringen und Lösen der prothetischen Komponente am Dentalimplantat ermöglicht, wie es insbesondere bei der Anpassung der Prothetik an die Mundsituation notwendig sein kann. Dabei kann die prothetische Komponente in der Art einer vorübergehenden Anbringung durch Einrasten am Dentalimplantat vorübergehend befestigt werden, wie es beispielsweise zur Ermittlung der Mundsituation und dem unmittelbaren Abgleich mit der Prothetik wünschenswert sein kann. Anschließend kann die prothetische Komponente wieder entnommen und bedarfsweise nachgearbeitet werden, so lange, bis die korrekte Anpassung an die Mundsituation erfolgt ist. Anschließend kann dann mit der fertiggestellten Prothetik die endgültige Montage erfolgen.

Zur Bildung des Rastsystems kann in weiterer vorteilhafter Ausgestaltung das System aus Führungsrippe und Führungsnut geeignet ausgestaltet sein, beispielsweise indem die Führungsnut zumindest abschnittsweise mit einer Anzahl von Hinterschneidungen versehen ist, in die an der Führungsrippe angeordnete Feder- oder Schnappelemente geeignet einrasten können. Alternativ oder zusätzlich kann auch die Justier-Führungspaarung mit einem entsprechenden Rastsystem ausgerüstet sein.

In ganz besonders bevorzugter, ebenfalls als eigenständig erfinderisch angesehener Ausführung ist die zur Verbindung der Komponenten miteinander vorgesehene Verbindungsschraube mit einer Anzahl von Rast- oder Federelementen versehen, die in eine korrespondierende Hinterschneidung im Aufnahmekanal für die Verbindungsschraube einrasten oder einschnappen können. Mit dieser Ausführungsform ist es selbst bei vergleichsweise schlank ausgeführten, nur wenig Bauraum bietenden Systemen möglich, in der Art einer Vormontage eine vorübergehende Fixierung der Komponenten miteinander durch Einrasten der Verbindungsschraube in den Aufnahmekanal vorzunehmen. Das solchermaßen vorübergehend montierte System kann anschließend auch wieder leicht und unproblematisch gelöst und für eine Nachbearbeitung bereitgestellt werden.

In einer besonders vorteilhaften Ausführungsform ist das Dental-Prothetiksystem für eine inhärente Absicherung gegen Montagefehler infolge von rotatorischen Positionierungsfehlern ausgestaltet. Dazu weisen das Dentalimplantat und die prothetische Konstruktion vorteilhafterweise einen zentralen Aufnahmekanal für eine Verbindungsschraube auf, wobei die Verbindungsschraube, insbesondere hinsichtlich der Schraubenlänge, unter Berücksichtigung der räumlichen Abmessungen des Dentalimplantats und der prothetischen Konstruktion derart dimensioniert und bemessen ist, dass ihr Schraubengewinde erst dann in ein korrespondierendes, im Dentalimplantat angeordnetes Innengewinde eingreift, wenn die oder jede Führungsrippe in die ihr jeweils zugeordnete Führungsnut eingegriffen hat. Vorzugsweise ist die Verbindungsschraube dabei mit einem Feingewinde ausgerüstet, dessen Steigung kleiner ist als die eines DIN-Gewindes. Insbesondere wird die genannte, auf die prothetische Konstruktion zur Verwendung mit einem in den Kieferknochen eines Patienten inserierten Dentalimplantat, in einem Dental-Prothetiksystem nach vorstehend genannter Bauart, gelöst mit einer zur Auflage auf eine Trägerfläche des Dentalimplantats vorgesehenen Basisfläche, an die eine Anzahl von Führungsrippen angeformt und/oder in die eine Anzahl von Führungsnuten eingebracht sind. Vorteilhafterweise weist die prothetische Konstruktion dabei einen zentralen Aufnahmekanal für eine Verbindungsschraube auf, der im Bereich seiner Austrittsöffnung an der Basisfläche zur Bildung einer Justiernut bzw. einer dieser hinsichtlich der Funktion entsprechenden Ausnehmung zur Aufnahme des Justierkragens einen aufgeweiteten Kanalquerschnitt aufweist.

Die mit der Erfindung erzielten Vorteile bestehen insbesondere darin, dass durch die von der oder den jeweiligen Führungsrippen in Kombination mit der oder den jeweils zugeordneten Führungsnuten gebildeten Führungspaarungen selbst bei weitegehend plan gehaltener Kontakt- oder Auflagefläche zwischen Dentalimplantat und prothetischer Konstruktion auch bei besonders gering gehaltener Bauhöhe eine zuverlässige und langlebige Einleitung sowohl axialer als auch lateraler Kräfte infolge der zu erwartenden Kaubelastung in das Dentalimplantat und über dieses in den Kieferknochen ermöglicht ist. Damit kann auch bei gering gehaltener Bauhöhe und entsprechend erhöhter Flexibilität bei der Gestaltung der über dem Implantat befindlichen Suprakonstruktion eine hohe mechanische Stabilität und Belastbarkeit des Systems erreicht werden.

Ein Ausführungsbeispiel der Erfindung wird anhand einer Zeichnung näher erläutert. Darin zeigen:
- FIG. 1: ein Dental-Prothetiksystem nach dem Stand der Technik im Längsschnitt,
- FIG. 2: ein erfindungsgemäßes Dental-Prothetiksystem im Längsschnitt,
- FIG. 3 bis 10: jeweils eine Ausführungsform der Implantat-Prothetik-Verbindung des Prothetiksystems nach FIG. 2 in unterschiedlichen Darstellungen,
- FIG. 11: eine modifizierte Verbindungsschraube mit angeformten Schnapphaken,
- FIG. 12: die Vormontage der Komponenten Trägerteil, Plattformstück und Verbindungsschraube in einer Sequenz von Montageschritten, und
- FIG. 13: eine alternative modifizierte Verbindungsschraube.

Gleiche Teile sind in allen Figuren mit denselben Bezugszeichen versehen.

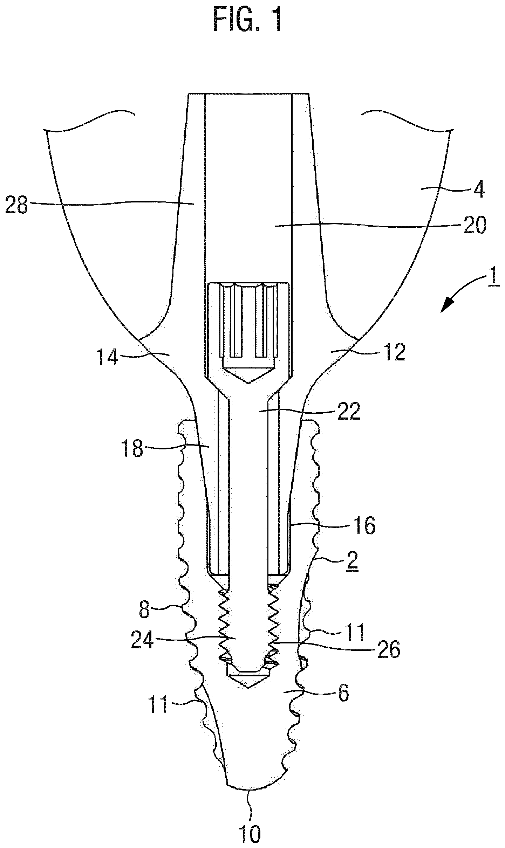

Das Dental-Prothetiksystem 1 gemäß FIG. 1 ist aus dem Stand der Technik bekannt und zum Einsatz in den Kieferknochen eines Patienten und dort zum Ausgleich des Verlusts eines Zahnes vorgesehen. Das Dental-Prothetiksystem 1 umfasst ein Dentalimplantat 2, das anstelle eines extrahierten oder ausgefallenen Zahnes in den Kieferknochen eingesetzt wird, und eine auf das Dentalimplantat 2 aufsetzbare in der Figur nur andeutungsweise dargestellte prothetische Konstruktion 4, die den eigentlichen Zahnersatz bildet. Bei der Insertion des Dental-Prothetiksystems 1 wird zunächst das Dentalimplantat 2 in den Kieferknochen eingesetzt. Nach einer Einheilphase von etwa vier bis zwölf Wochen wird sodann die als Zahnersatz dienende prothetische Konstruktion 4 auf das Dentalimplantat 2 aufgesetzt und dort fixiert.

Das Dentalimplantat 2 kann einteilig ausgeführt sein, ist in der gezeigten Variante aber mehrteilig ausgeführt. Es umfasst als eine Komponente den Implantatkörper 6, der als geeignet geformter Metallkörper aus Titan ausgebildet ist und zum Einschrauben an der vorgesehenen Stelle in den Kieferknochen mit einem Außengewinde 8 versehen ist. Dieses ist am apikalen Ende 10 zur Erleichterung der Insertion als selbstschneidendes Schraubengewinde ausgeführt und umfasst zudem eine Anzahl von integrierten Schneidnuten 11. Als weitere Komponente umfasst das Dentalimplantat 2 ein auch als Abutment bezeichnetes Aufbauteil 12. Dieses umfasst einen aus im Hinblick auf die erwünschte Biokompatibilität geeignet gewählten Material, vorzugsweise aus einem Material auf Titanbasis oder einem Keramikmaterial, gefertigten Grundkörper 14, an den ein in einen zugeordneten Aufnahmekanal 16 des Implantatkörpers 6 einbringbarer und in seinen Abmessungen und an eine ggf. vorhandene Indizierung angepasster Verbindungszapfen 18 angeformt ist. Der Verbindungszapfen 18 kann dabei im Querschnitt rund, zur Erzeugung einer Indizierung nicht rund, beispielsweise sechskantförmig, oder auch in der Art einer Mischform segmentweise aus runden und nichtrunden Zonen kombiniert ausgeführt sein. Der Implantatkörper 6 ist in der gezeigten Variante für eine besonders günstige Osseointegration, also für ein günstiges Einheilverhalten in den Kieferknochen, mit einem triovalen Außenquerschnitt, insbesondere im Bereich des Außengewindes 8, ausgeführt.

Das Aufbauteil 12 weist in seinem zentralen Innenbereich einen Aufnahmekanal 20 für eine Verbindungsschraube 22 auf. Diese greift im dargestellten montierten Zustand mit ihrem Außengewinde 24 in ein Innengewinde 26 im Implantatkörper 6 ein, so dass eine stabile Verbindung der Komponenten hergestellt ist. Zur Anbringung der prothetischen Konstruktion 4 ist am Aufbauteil 12 ein Montagezapfen 28 mit vergleichsweise großer länglicher Ausdehnung angeformt, auf den die prothetische Konstruktion 4 beispielsweise aufgeklebt sein kann. Die längliche Ausdehnung des Montagezapfens 28 ist dabei im Hinblick auf eine ausreichend hohe mechanische Stabilität auch gegenüber den infolge der Kaubelastung zu erwartenden seitlich eingeleiteten Kräften geeignet gewählt, wobei dies jedoch in eigentlich unerwünschter Weise mit einer vergleichsweise großen Bauhöhe des Prothetiksystems 1 einhergeht.

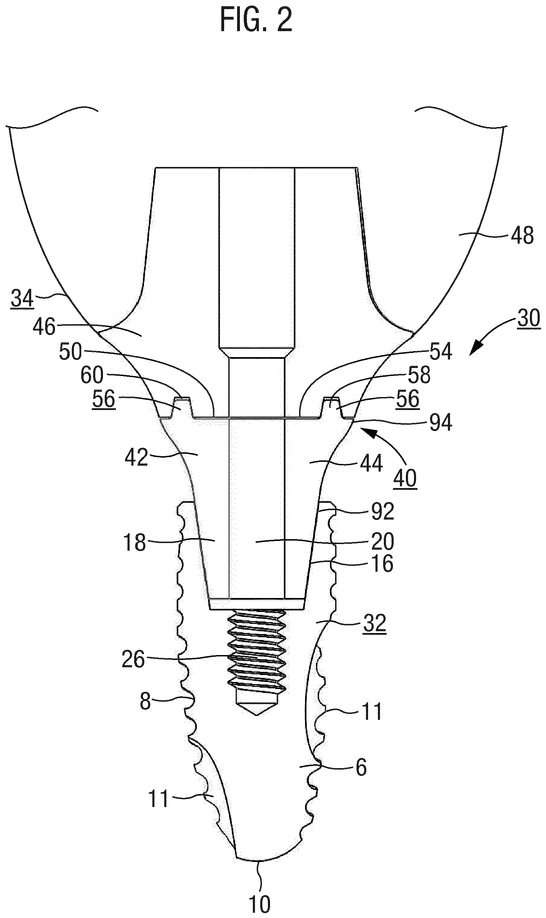

Um dem entgegenzuwirken, ist das erfindungsgemäße Dental-Prothetiksystem 30 vorgesehen, wie es in einem Ausführungsbeispiel in FIG. 2 gezeigt ist. Auch dieses umfasst ein Dentalimplantat 32 und eine auf das Dentalimplantat 32 aufsetzbare prothetische Konstruktion 34, die den eigentlichen Zahnersatz bildet. Zur Erreichung der gewünschten Effekte, nämlich einer hohen mechanischen Stabilität auch gegenüber seitlich einwirkenden Kräften bei geringer Bauhöhe, ist das Dental-Prothetiksystem 30 mit einer spezifisch ausgestaltete, als eigenständig erfinderisch angesehenen Verbindung 40 zwischen dem Dentalimplantat 32 und der prothetischen Konstruktion 34 ausgerüstet.

Das Dentalimplantat 32 könnte dabei ebenfalls einstückig ausgeführt sein, wobei in diesem Fall die Verbindung 40 im Bereich der endseitigen Stirnfläche vorgesehen wäre. Im Ausführungsbeispiel ist aber ein mehrteilig ausgeführtes Dentalimplantat 32 dargestellt, das als eine seiner Komponenten einen möglicherweise mit dem bekannten Implantat 2 baugleichen Implantatkörper 6 umfasst. Anstelle des Aufbauteils 12 ist in der dargestellten Ausführungsform der Erfindung aber nunmehr als weitere Komponente des Dentalimplantats 32 ein Plattformstück 42 zur Herstellung der Verbindung 40 mit der prothetischen Konstruktion 34 vorgesehen. Das Plattformstück 42 umfasst einen aus im Hinblick auf die erwünschte Biokompatibilität geeignet gewählten Material, vorzugsweise aus einem Material auf Titanbasis oder einem Keramikmaterial, gefertigten Grundkörper 44, an den ein in einen zugeordneten Aufnahmekanal 16 des Implantatkörpers 6 einbringbarer und in seinen Abmessungen und an eine ggf. vorhandene Indizierung angepasster Verbindungszapfen 18 angeformt ist. Der Verbindungszapfen 18 kann dabei im Querschnitt rund, zur Erzeugung einer Indizierung nicht rund, beispielsweise sechskantförmig, oder auch in der Art einer Mischform segmentweise aus runden und nichtrunden Zonen kombiniert ausgeführt sein. Der Implantatkörper 6 ist auch im Ausführungsbeispiel für eine besonders günstige Osseointegration, also für ein günstiges Einheilverhalten in den Kieferknochen, mit einem triovalen Außenquerschnitt, insbesondere im Bereich des Außengewindes 8, ausgeführt.

Die prothetische Konstruktion 34 kann ebenfalls einteilig ausgeführt sein und ausschließlich aus der eigentlich zur Bildung des Zahnersatzes gebildeten Prothetik bestehen. Im Ausführungsbeispiel ist die prothetische Konstruktion aber ebenfalls mehrteilig ausgebildet und umfasst ein zentrales, zur eigentlichen Verbindung mit dem Dentalimplantat 32 vorgesehenes Trägerteil 46 und ein auf diesem angeordnetes, die eigentliche Prothetik bildendes Prothetikteil 48. Durch diese Bauweise ist eine unterschiedliche Materialwahl für das Trägerteil 46 einerseits (im Ausführungsbeispiel Titan) und das eigentliche Prothetikteil 48 (im Ausführungsbeispiel Keramik) ermöglicht.

Das Dental-Prothetiksystem 30 ist in besonderem Maße dafür ausgelegt, dass selbst bei hoher mechanischer Belastbarkeit infolge der zu erwartenden Kräfte durch die Kaubelastung eine hohe Flexibilität beim Einsatz und gerade auch bei der Anpassung der Prothetik an die Mundsituation des Patienten gegeben ist. Um dies zu ermöglichen, ist das Dental-Prothetiksystem 30 im Bereich der Verbindung 40 zwischen Dentalimplantat 32 und prothetischer Konstruktion 34 gezielt für eine besonders gering gehaltene Gesamt-Bauhöhe ausgelegt. Dazu bildet das Dentalimplantat 32 an seiner zur Anbringung der prothetischen Konstruktion 34 vorgesehenen Stirnseite 50 als Trägerfläche für die prothetische Konstruktion 34 eine vergleichsweise flach ausgestaltete, im Wesentlichen planare Auflagefläche 52. Entsprechend ist die prothetische Konstruktion 34 unter Bildung einer in ihrer Kontur an die Auflagefläche 52 angepasste, ebenfalls vergleichsweise flach ausgeführte im Wesentlichen planare Basisfläche 54 ausgestaltet. Durch diese Konfiguration ist erreicht, dass unter Einhaltung einer sehr geringen Bauhöhe in axialer Richtung einwirkende Kräfte zuverlässig von der prothetischen Konstruktion 34 in das Dentalimplantat 32 und über dieses in den Kieferknochen eingeleitet werden. Um dabei eine besonders einfache Montage der Komponenten im Patientenmund zu ermöglichen, sind die genannten Bauteile derart bemessen und dimensioniert, dass die vorliegend vom Plattformstück 42 gebildete Auflagefläche 52 des Dentalimplantats 32 im montierten Zustand oberhalb des Gewebes positioniert ist, so dass das Dentalimplantat 32 ein so genanntes "tissue level" Implantat bildet. Die Auflagefläche 52 des Plattformstücks 42 bildet somit eine leicht zugängliche Plattform zur Anbringung der prothetischen Konstruktion 34.

Das Dental-Prothetiksystem 30 ist zudem aber auch für eine hohe mechanische Stabilität und Belastbarkeit gegenüber in lateraler Richtung einwirkender Kraftkomponenten ausgelegt. Dazu sind die Auflagefläche 52 und die Basisfläche 54 mit einer Anzahl von Führungspaarungen 56 versehen, die in der Art einer Nut-Feder-Kombination eine zumindest partielle Verhakung und/oder einen Formschluss von Dentalimplantat 32 und prothetischer Konstruktion 34 in lateraler Kraftrichtung bewirken.

Dazu umfasst die oder jede Führungspaarung 56 jeweils eine an eine der Flächen 52,54 angeformte Führungsrippe 58 und eine korrespondierende, in die jeweils andere Fläche 54 bzw. 52 eingebrachte Führungsnut 60. Im Ausführungsbeispiel sind die Führungsrippen 58 in der Art vorspringender Wülste oder Anformungen an der Auflagefläche 52 und somit am Dentalimplantat 32 angeordnet, wobei die korrespondierenden, zur Aufnahme der Führungsrippen 58 vorgesehenen Führungsnuten 60 in die Basisfläche 54 und somit in die prothetische Komponente 34 integriert sind. Selbstverständlich ist aber auch eine andere Ausgestaltung möglich, bei der die Führungsrippen 58 an der prothetischen Konstruktion 34 und die Führungsnuten 60 im Dentalimplantat 32 vorgesehen sind.

Nachfolgend werden Varianten und weitere Details der erfindungsgemäßen Verbindung 40 erläutert. Dies erfolgt anhand von Darstellungen der vorliegend zur Ausbildung der Erfindung vorgesehenen Komponenten des Plattformstücks 42 einerseits und des Trägerteils 46, wobei selbstverständlich auch Varianten mit erfasst sein sollen, bei denen entsprechende Ausgestaltungen direkt an einem Implantatkörper und/oder einem Prothetikteil angeordnet sind.

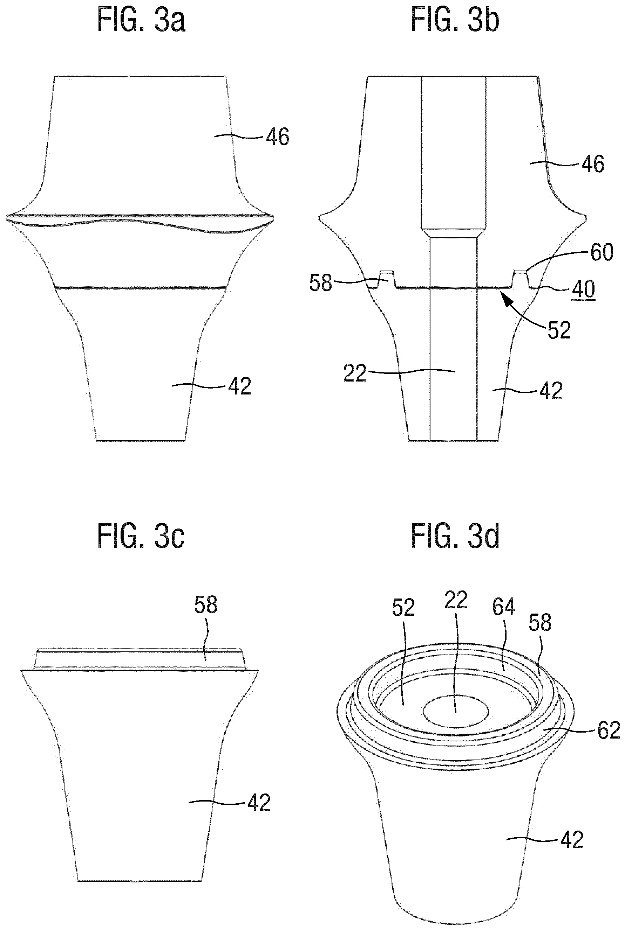

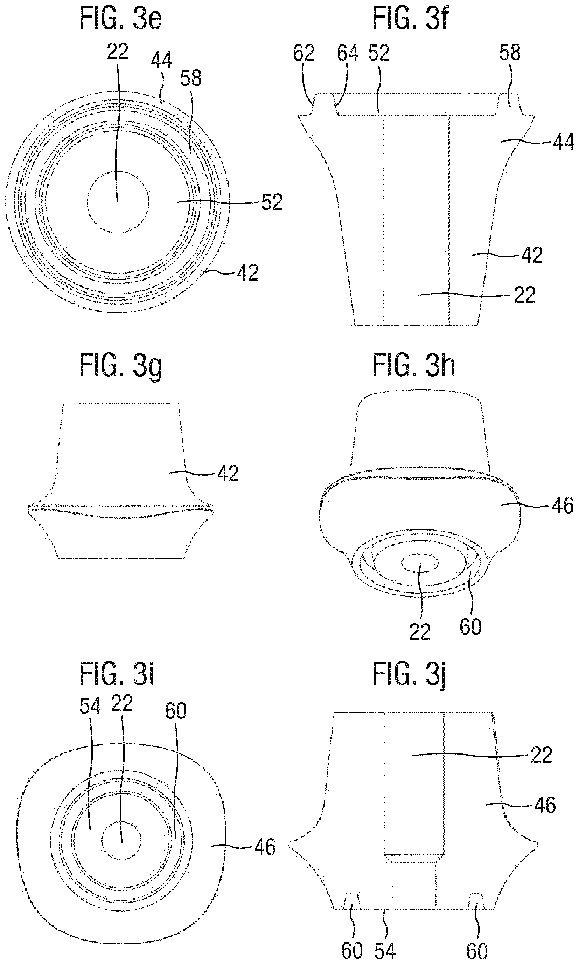

In FIG. 3 ist ein Ausführungsbeispiel der Erfindung dargestellt, wobei FIG. 3a die miteinander verbundenen Komponenten Plattformstück 42 und Trägerteil 46 in seitlicher Ansicht, FIG. 3b die miteinander verbundenen Komponenten Plattformstück 42 und Trägerteil 46 im Längsschnitt, FIG. 3c das Plattformstück 42 in seitlicher Ansicht, FIG. 3d das Plattformstück 42 in seitlicher Draufsicht, FIG. 3e das Plattformstück 42 in Draufsicht, FIG. 3f das Plattformstück 42 im Längsschnitt, FIG. 3g das Trägerteil 46 in seitlicher Ansicht, FIG. 3h das Trägerteil 46 in einer Ansicht von seitlich unten, FIG. 3i das Trägerteil 46 von unten und FIG. 3j das Trägerteil 46 im Längsschnitt zeigen.

Im vorliegenden Ausführungsbeispiel gemäß FIG. 3 ist lediglich eine Führungsrippe 58 vorgesehen (analog dazu und in angepasster Konturierung natürlich auch eine Führungsnut 60). Die Führungsrippe 58 und entsprechend die ihr zugeordnete Führungsnut 60 ist in der Art einer an die Auflagefläche 52 angeformten Ringwulst mit einer umlaufenden, in sich geschlossenen Kontur ausgeführt. Durch eine solche umlaufende Kontur ist die zuverlässige Aufnahme von Kaubelastungen unabhängig von der ursprünglichen Kraftrichtung zuverlässig möglich, wobei zudem als weiterer Vorteil bei montiertem System in der Art einer Zusatzfunktion noch eine Dichtwirkung für den Innenraum gegeben ist.

Wie der Darstellung gemäß FIG. 3 zudem entnehmbar ist, bildet die in der Art einer Ringwulst mit einer umlaufenden, in sich geschlossenen Kontur ausgeführte Führungsrippe 58 (und entsprechend die ihr zugeordnete Führungsnut 60) bezogen auf die Längsachse des Dentalimplantats mit ihren Seitenrändern 62, 64 in Draufsicht eine runde Kontur, ebenso wie er Grundkörper 44 des Plattformstücks 42 in diesem Fall einen kreisrunden Außenquerschnitt aufweist. Beide Komponenten weisen im Übrigen den Aufnahmekanal 22 für die Verbindungsschraube auf.

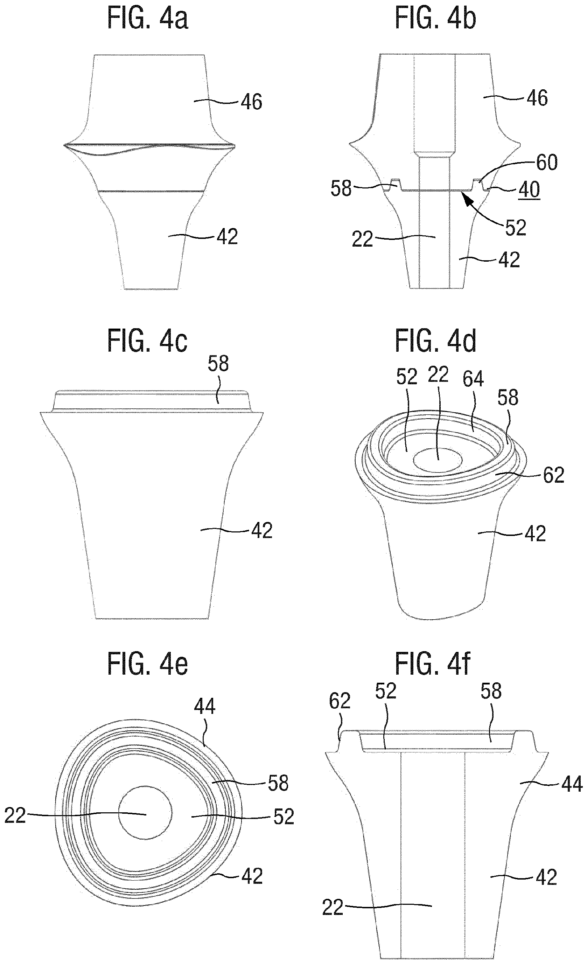

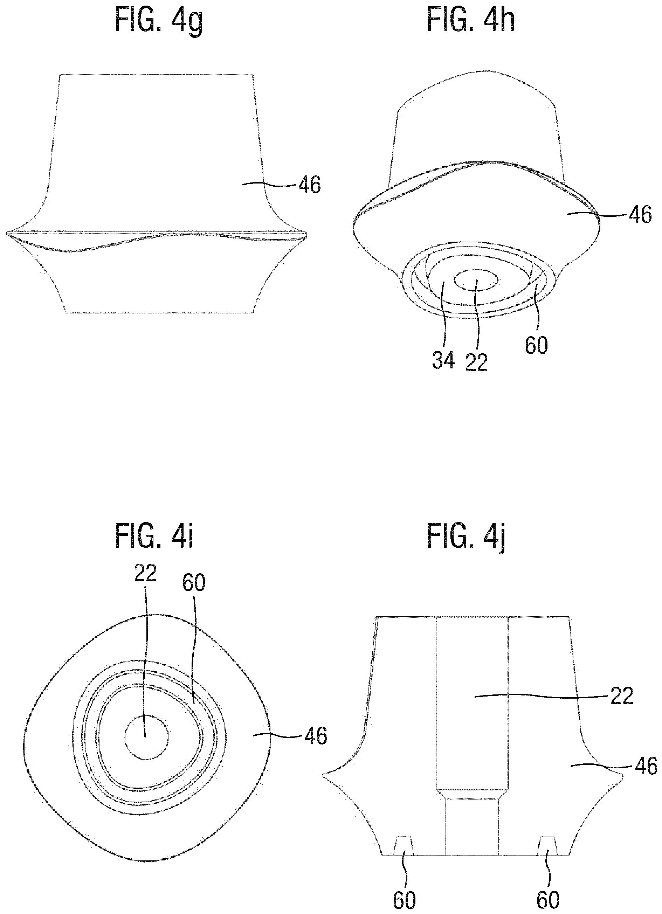

Im Gegensatz dazu zeigt FIG. 4 ein Ausführungsbeispiel mit einer nicht runden, nämlich im Ausführungsbeispiel angepasst an den Außenquerschnitt des Implantatkörpers 6 einer triovalen, Kontur. Dabei zeigen FIG. 4a die miteinander verbundenen Komponenten Plattformstück 42 und Trägerteil 46 in seitlicher Ansicht, FIG. 4b die miteinander verbundenen Komponenten Plattformstück 42 und Trägerteil 46 im Längsschnitt, FIG. 4c das Plattformstück 42 in seitlicher Ansicht, FIG. 4d das Plattformstück 42 in seitlicher Draufsicht, FIG. 4e das Plattformstück 42 in Draufsicht, FIG. 4f das Plattformstück 42 im Längsschnitt, FIG. 4g das Trägerteil 46 in seitlicher Ansicht, FIG. 4h das Trägerteil 46 in einer Ansicht von seitlich unten, FIG. 4i das Trägerteil 46 von unten und FIG. 4j das Trägerteil 46 im Längsschnitt. Deutlich zu sehen ist dabei die nicht runde, triovale Ausführung der Kontur von Führungsrippe 58 einerseits und korrespondierender Führungsnut 60 andererseits. Durch eine solche nicht runde Ausgestaltung der Kontur bildet das entsprechende Führungspaar 56 zusätzlich zu seiner eigentlichen Funktion, nämlich der geeigneten Krafteinleitung, auch noch die Funktionalität einer Indexierung ab, so dass die Montage der prothetischen Konstruktion 34 auf dem Dentalimplantat 32 ausschließlich in denjenigen rotatorischen Ausrichtungen möglich ist, in denen die Führungsrippe 58 passend zur zugeordneten Führungsnut 60 rotatorisch ausgerichtet ist.

Im in den FIG. 3, 4 gezeigten Ausführungsbeispielen ist die Führungsrippe 58 in Draufsicht gesehen als umlaufendes Band mit annähernd gleichbleibender Breite ausgeführt. Dazu weisen die beiden Seitenränder 62, 64 eine aneinander angepasste Kontur auf, die in Draufsicht die genannte runde bzw. nicht runde, vorzugsweise triovale oder quadovale, Form annimmt. In einer alternativen Ausgestaltung kann die Führungsrippe 58 (und entsprechend die zugeordnete Führungsnut 60) in Draufsicht gesehen aber auch als umlaufendes Band mit unterschiedlich konturierten Seitenrändern 62, 64 ausgeführt sein, wobei beispielsweise einer der Seitenränder 64 in Draufsicht eine runde Kontur einnimmt und die Indizierung über den anderen, beispielsweise in Draufsicht in der Art eines Triovals oder Quadovals geformten Seitenrand 62 erfolgt.

Die Ausführung der Führungsrippe 58 und der zugeordneten Führungsnut 60 jeweils als umlaufendes, durchgehendes Band hat bei beiden genannten Varianten (ebenso wie in den noch folgenden) den erheblichen Vorteil, dass damit die Herstellung, beispielsweise durch Fräsen, bedeutend erleichtert wird, insbesondere da sprunghafte Konturänderungen vermieden werden können. Dies Erleichterung bei der Herstellung macht unter Umständen vollständig neuartige Materialklassen in einem solchen System nutzbar; beispielsweise könnte ein im Rahmen der prothetischen Konstruktion 34 vorgesehener Keramikkörper vergleichsweise einfach und mit hoher Produktionssicherheit mit einer solchen Nut versehen werden.

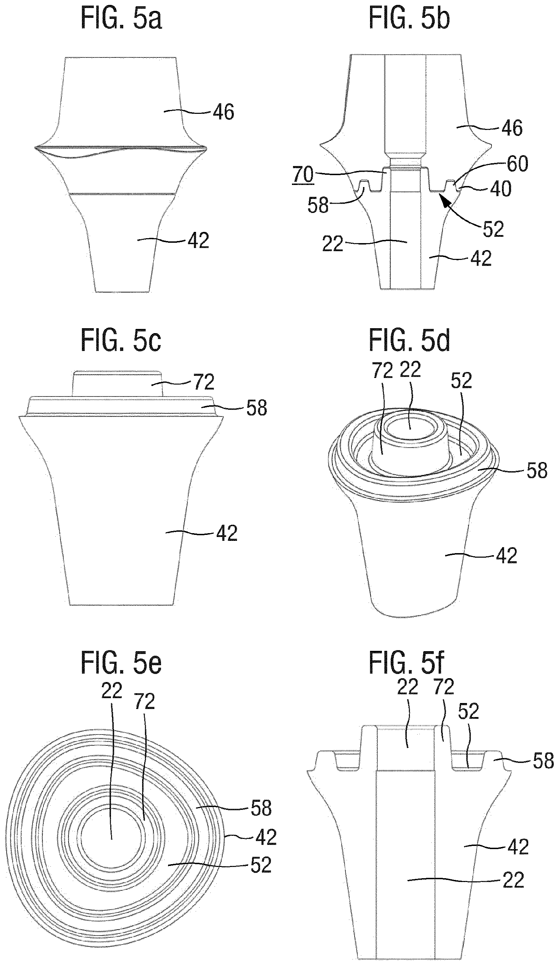

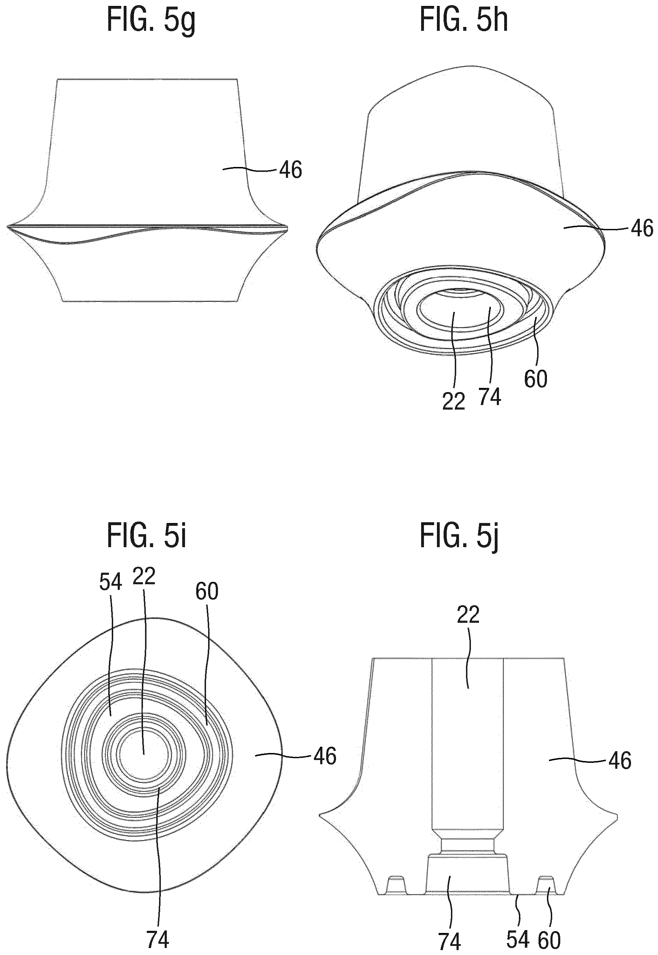

Eine alternative, als eigenständig erfinderisch angesehene und besonders bevorzugte Ausführungsform der Verbindung 40 des Dental-Prothetiksystems 1 ist in FIG. 5 gezeigt. Dabei zeigen FIG. 5a die miteinander verbundenen Komponenten Plattformstück 42 und Trägerteil 46 in seitlicher Ansicht, FIG. 5b die miteinander verbundenen Komponenten Plattformstück 42 und Trägerteil 46 im Längsschnitt, FIG. 5c das Plattformstück 42 in seitlicher Ansicht, FIG. 5d das Plattformstück 42 in seitlicher Draufsicht, FIG. 5e das Plattformstück 42 in Draufsicht, FIG. 5f das Plattformstück 42 im Längsschnitt, FIG. 5g das Trägerteil 46 in seitlicher Ansicht, FIG. 5h das Trägerteil 46 in einer Ansicht von seitlich unten, FIG. 5i das Trägerteil 46 von unten und FIG. 5j das Trägerteil 46 im Längsschnitt im Längsschnitt.

Diese besonders bevorzugte Variante umfasst als zusätzliche Komponenten im Vergleich zu den oben erläuterten Varianten noch eine Justier-Führungspaarung 70. Diese besteht im Ausführungsbeispiel aus einem an die Auflagefläche 52 angeformten, bezüglich der Längsachse des Dentalimplantats rotationssysmmetrischen Justierkragen 72 und aus einer korrespondierenden, in die Basisfläche 54 eingebrachten Justiernut, im Ausführungsbeispiel einer Justierausnehmung 74. Der Justierkragen 72 weist dabei eine runde Außenkontur auf, und daran angepasst ist der Innenquerschnitt der Justierausnehmung 74 ebenfalls rund. Die Höhe des Justierkragens 72 ist dabei größer gewählt als die größte Höhe der Führungsrippe 58. Damit ist erreicht, dass die Endmontage, also die Anbringung der prothetischen Komponente 34 am Dentalimplantat 32, ganz besonders vereinfacht werden kann. Beim Aufsetzen der prothetischen Komponente 34 auf das Dentalimplantat 32 kann nämlich zunächst der Justierkragen 72 mit der zugehörigen Justierausnehmung 74 in Eingriff gebracht werden.

Dabei ist die weitere angeformte Führungsrippe 58 aufgrund ihrer im Vergleich zum Justierkragen 72 geringeren Bauhöhe nicht störend, so dass durch das Einbringen des Justierkragens 72 in die Justierausnehmung 74 zunächst auf vergleichsweise einfache Weise, und für den Anwender ohne notwendigen Sichtkontakt, die korrekte laterale Position der prothetischen Konstruktion 34 relativ zum Dentalimplantat 32 ermittelt werden kann. Aufgrund der vorgesehenen runden Außenkontur des Justierkragens 72 und der entsprechenden ebenfalls runden Innenkontur der Justierausnehmung 74 kann sodann unter Beibehaltung der durch den schon in teilweisem Eingriff befindlichen Justierkragen 72 korrekten lateralen Positionierung durch Rotation die korrekte rotatorische Ausrichtung der prothetischen Komponente 34 ermittelt werden. Diese ist dann erreicht, wenn die Führungsrippe 58 in korrekte Überlappung mit der ihr zugeordneten Führungsnut 60 gebracht wird. In diesem Fall können auch diese in Eingriff gebracht werden, und die prothetische Konstruktion 34 kann mit ihrer Basisfläche 54 bis zum Anschlag mit der Auflagefläche 52 des Dentalimplantats 32 in Kontakt gebracht werden.

Der Justierkragen 72 ist unmittelbar um die stirnseitige Austrittsöffnung 78 des Aufnahmekanals 22 umlaufend angeordnet.

In FIG. 5j ist das Trägerteil 46 der prothetischen Konstruktion 34 des solchermaßen ausgestalteten Dental-Prothetiksystems 30 im Längsschnitt gezeigt. Wie dieser Darstellung entnehmbar ist, weist die prothetische Konstruktion 34 einen zentralen Aufnahmekanal 22 für eine nicht näher dargestellte Verbindungsschraube auf, mit der die Komponenten aneinander befestigt werden können. Der Aufnahmekanal 22 ist im Bereich seiner Austrittsöffnung 78 an der Basisfläche 54 in seinem Kanalquerschnitt aufgeweitet, so dass sich eine innenseitig mit dem Aufnahmekanal 22 verschmelzende Justiernut oder Justierausnehmung 74 bildet.

In einer weiteren als besonders vorteilhaft angesehenen Ausgestaltung kann anstelle einer einzigen Verbindungsschraube auch ein System mit mehreren, insbesondere zwei, Verbindungsschrauben vorgesehen sein. Dabei kann eine erste Verbindungsschraube zur Verbindung des Plattformstücks 42 mit dem Implantatkörper 6 vorgesehen sein, die durch eine weitere, zur Verbindung des Trägerteils 46 oder der prothetischen Konstruktion 34 insgesamt mit dem Dentalimplantat 32 vorgesehen ist.

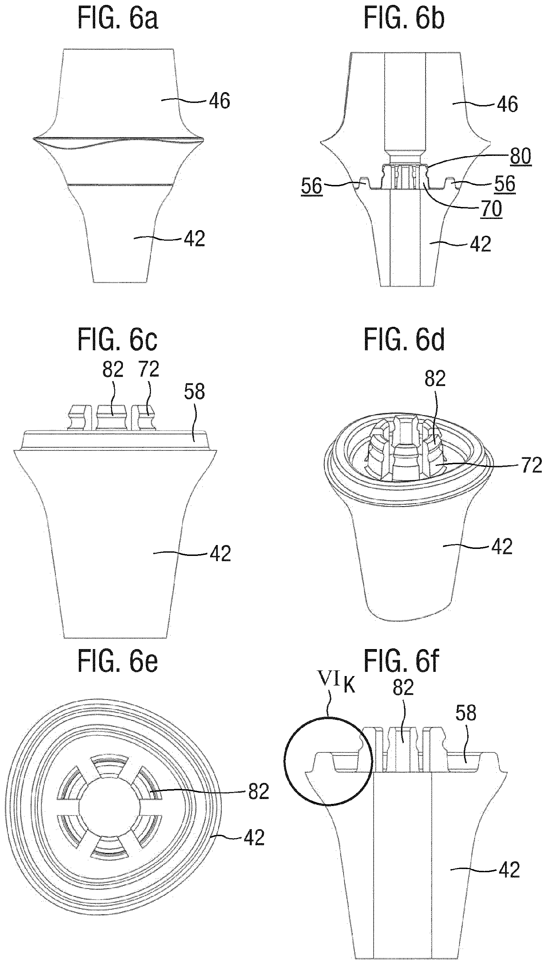

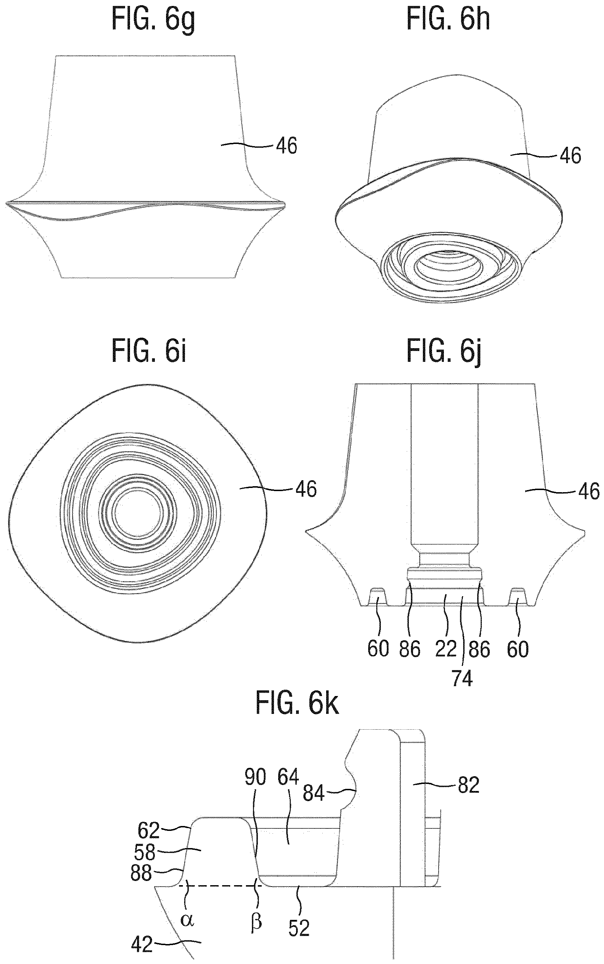

In einer noch weiter verbesserten und damit bevorzugten Variante, wie sie in FIG. 6 gezeigt ist, ist die Justier-Führungspaarung 70 mit einem Rastsystem 80 ausgerüstet. Dabei zeigen im Einzelnen FIG. 6a die miteinander verbundenen Komponenten Plattformstück 42 und Trägerteil 46 in seitlicher Ansicht, FIG. 6b die miteinander verbundenen Komponenten Plattformstück 42 und Trägerteil 46 im Längsschnitt, FIG. 6c das Plattformstück 42 in seitlicher Ansicht, FIG. 6d das Plattformstück 42 in seitlicher Draufsicht, FIG. 6e das Plattformstück 42 in Draufsicht, FIG. 6f das Plattformstück 42 im Längsschnitt, FIG. 6g das Trägerteil 46 in seitlicher Ansicht, FIG. 6h das Trägerteil 46 in einer Ansicht von seitlich unten, FIG. 6i das Trägerteil 46 von unten, FIG. 6j das Trägerteil 46 im Längsschnitt und FIG. 6k eine ausschnittsweise Vergrößerung aus FIG. 6f.

Zur Bereitstellung des Rastsystems 80 ist in dieser Variante der Justierkragen 72 durchbrochen ausgeführt, so dass er einzelne, nebeneinander umlaufend angeordnete Schnapphaken 82 ausbildet. Diese können aufgrund der Durchbrechungen nach innen hin, also insbesondere in den Aufnahmekanal 22 hinein, zurückweichen. An ihrer Vorderseite sind die Schnapphaken 82, wie dies insbesondere der ausschnittsweisen Vergrößerung gemäß FIG. 6k entnehmbar ist, mit einer Rastnut 84 versehen. Korrespondierend dazu ist im Aufnahmekanal 22 im Bereich der durch Erweiterung des Kanalquerschnitts entstehenden Ausnehmung 74 eine umlaufende Rastrille 86 angeordnet, so dass die Schnapphaken 82 beim Einführen des nun durchbrochen ausgeführten Justierkragens 72 in die Ausnehmung 74 zunächst in Richtung in den Aufnahmekanal 22 hinein ausweichen und anschließend mit der Rastnut 84 in die Rastrille 86 einschnappen.

In alternativer, als eigenständig erfinderisch angesehener Ausführung kann auch die Führungspaarung 56 zur Bildung des Rastsystems 80 geeignet ausgeführt sein. In einer solchen Ausführungsform kann beispielsweise die jeweilige Führungsrippe 58 durchbrochen ausgeführt sein, so dass sie einzelne Schnapphaken 82 ausbildet. Korrespondierend dazu kann dann die Führungsnut 60 mit geeignet positionierten Hinterschneidungen oder dergleichen ausgeführt sein, so dass die Schnapphaken 82 bei der Montage der Komponenten einrasten können.

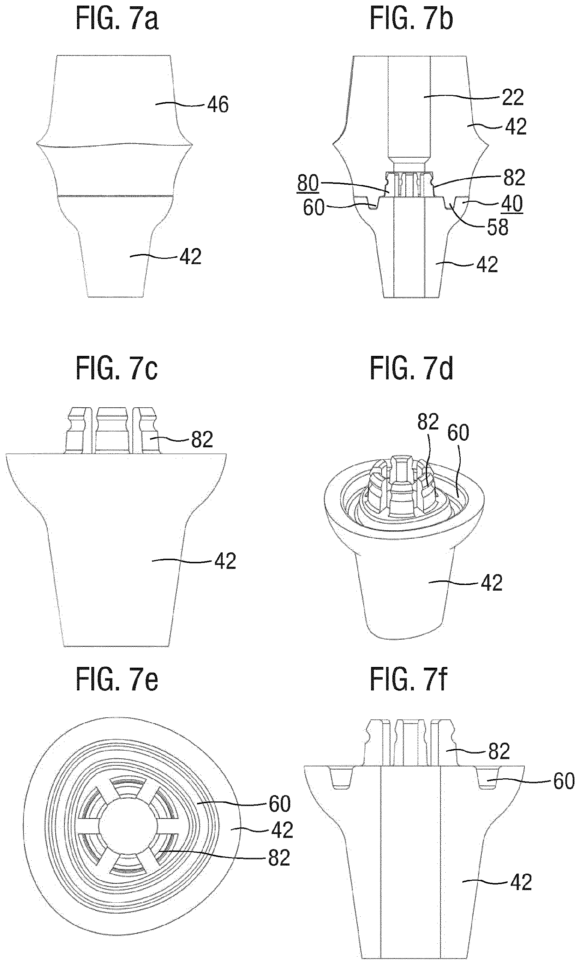

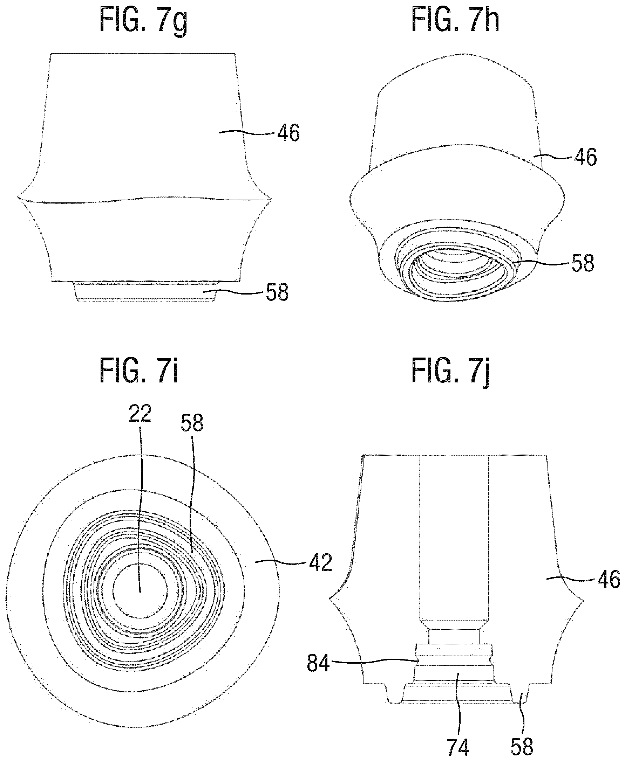

Im Ausführungsbeispiel gemäß FIG. 7 ist eine Variante gezeigt, bei der die Führungsrippe 58 am Trägerteil 46 angeformt und die Führungsnut 60 in das Plattformstück 60 integriert ist. Dabei zeigen FIG. 7a die miteinander verbundenen Komponenten Plattformstück 42 und Trägerteil 46 in seitlicher Ansicht, FIG. 7b die miteinander verbundenen Komponenten Plattformstück 42 und Trägerteil 46 im Längsschnitt, FIG. 7c das Plattformstück 42 in seitlicher Ansicht, FIG. 7d das Plattformstück 42 in seitlicher Draufsicht, FIG. 7e das Plattformstück 42 in Draufsicht, FIG. 7f das Plattformstück 42 im Längsschnitt, FIG. 7g das Trägerteil 46 in seitlicher Ansicht, FIG. 7h das Trägerteil 46 in einer Ansicht von seitlich unten, FIG. 7i das Trägerteil 46 von unten und FIG. 7j das Trägerteil 46 im Längsschnitt.

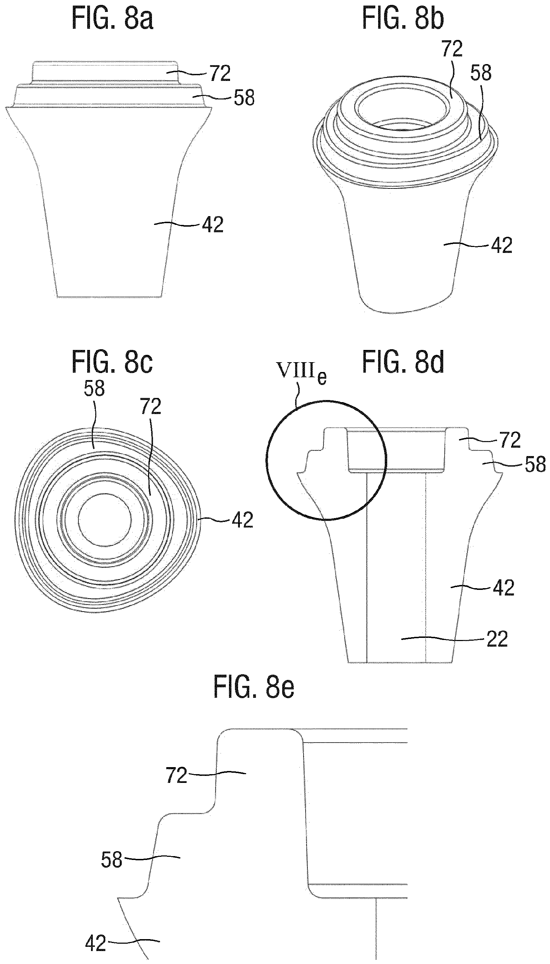

In einer weiteren alternativen Ausführungsform, wie sie in FIG. 8 dargestellt ist, kann der Justierkragen 72 auch auf die oder eine der Führungsrippen 58 aufgesetzt sein, so dass sie gemeinsam eine ineinander übergehende Profilkontur ergeben. In FIG. 8 zeigen FIG. 8a das Plattformstück 42 in seitlicher Ansicht, FIG. 8b das Plattformstück 42 in seitlicher Draufsicht, FIG. 8c das Plattformstück 42 in Draufsicht, FIG. 8d das Plattformstück 42 im Längsschnitt und FIG. 8e einen vergrößerten Ausschnitt von FIG. 8d. Gerade der Draufsicht gemäß FIG. 8c ist deutlich entnehmbar, dass der Justierkragen 72 einen runden Außenquerschnitt aufweist und somit noch aufgefundener lateraler Positionierung eine Rotation der Komponenten relativ zueinander erlaubt, wohingegen die Führunsgrippe 58 eine triovale Außenkontur aufweist und damit eine Indizierung bildet.

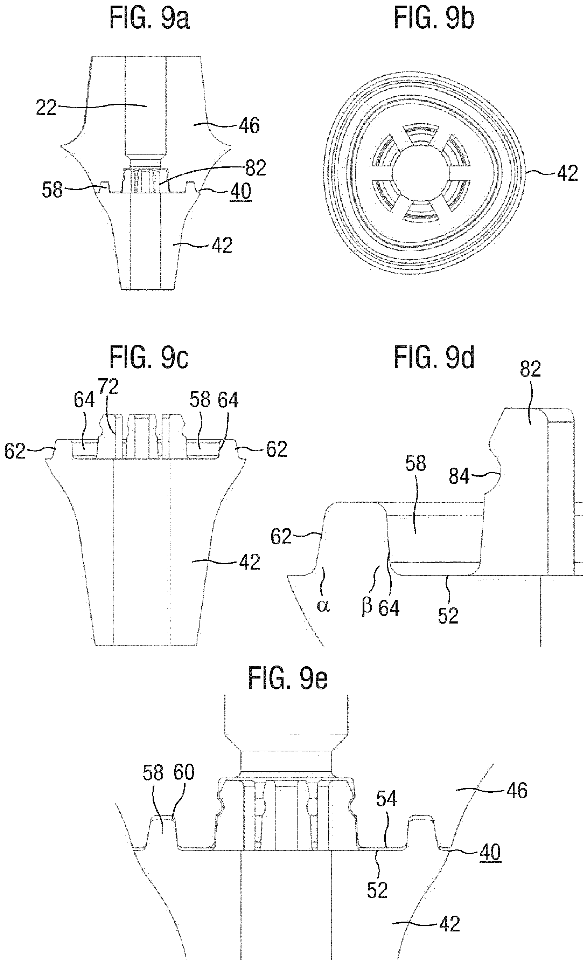

Von besonderer Bedeutung ist auch das Profil der Führungsrippe 58 oder der Führungsrippen 58 und der jeweils zugeordneten Führungsnuten 60. Wie beispielsweise der Ausführunsgform gemäß FIG. 6k entnehmbar weist die Führungsrippe 58 ein Rippenprofil mit Flanken 88, 90 auf, die mit der Ebene der Auflagefläche 52 jeweils die Flankenwinkel α, β bilden und umlaufend gesehen den äußeren Seitenrand 62 bzw. den inneren Seitenrand 64 bilden. Alternativ oder zusätzlich kann das Rippenprofil der Führungsrippe 58 auch mit einer oder beiden Flanken 88, 90 als bauchige Flanken 88, 90 ausgeführt sein. Beide Ausführungen sind jeweils eigenständig oder auch in Kombination miteinander besonders vorteilhaft, um die zu erwartenden unterschiedlichen Druck- und Zugkräfte in Folge der zu erwartenden Kaubelastung geeignet zu kompensieren. In einer bevorzugten Ausführungsform, wie sie in FIG. 9 gezeigt ist, sind die Flankenwinkel α, β unterschiedlich groß gewählt, wobei der dem äußeren Seitenrand 62 zugeordnete Flankenwinkel a kleiner ist als der dem inneren Seitenrand 64 zugeordnete Flankenwinkel β, so dass der innere Seitenrand 64 "steiler" auf der Auflagefläche 52 steht als der äußere Seitenrand 62.. Dies ist im Ausführungsbeispiel gemäß FIG. 9 gezeigt. Darin zeigen Einzelnen FIG. 9a die miteinander verbundenen Komponenten Plattformstück 42 und Trägerteil 46 im Längsschnitt, FIG. 9b das Plattformstück 42 in Draufsicht, FIG. 9c das Plattformstück 42 im Längsschnitt, FIG. 9d eine ausschnittsweise Vergrößerung aus FIG. 9c und FIG. 9e eine ausschnittsweise Vergrößerung aus FIG. 9a.

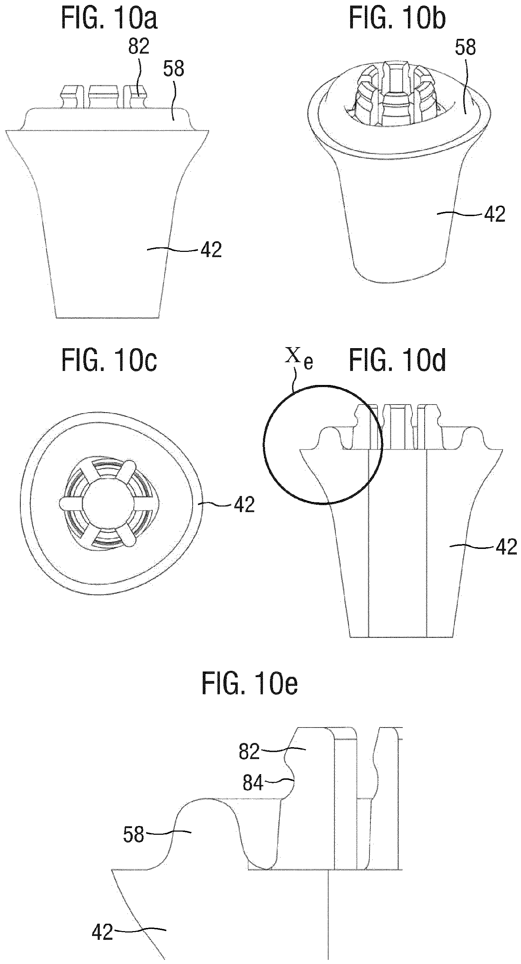

In einer weiteren alternativen Ausgestaltung, wie sie in FIG. 10 gezeigt ist, kann die Führungsrippe 58 auch in der Art einer Wulst mit gekrümmtem Profil der Seitenränder 62, 64 ausgestattet sein. Dabei zeigen FIG. 10a das Plattformstück 42 in seitlicher Ansicht, FIG. 10b das Plattformstück 42 in seitlicher Draufsicht, FIG. 10c das Plattformstück 42 in Draufsicht, FIG. 10d das Plattformstück 42 im Längsschnitt und FIG. 10e einen Ausschnitt aus FIG. 10d. Deutlich erkennbar ist dabei die gekrümmte Kontur des Profils der Führungsrippe 58.

Durch die zweiteilige Ausführung des Dentalimplantats 32 in den vorgenannten Ausführungsbeispielen wird als zusätzlicher erheblicher Vorteil erreicht, dass der Implantatkörper 6 nach der Insertion als so genanntes "bone level" Implantat mit seiner Oberkante 92 im Bereich des Kieferknochens positioniert ist, oberhalb dessen sich normalerweise noch Gewebe befindet (vgl. FIG. 2). Damit kann bedarfsweise nach dem Setzen des Implantatkörpers 6 zunächst die Wunde verschlossen werden, so dass in der Art einer "geschlossenen" Einheilung der Einheilprozess relativ schonend und sicher erfolgen kann. Dies könnte insbesondere dann vorteilhaft sein, wenn sich beim Setzen des Implantatkörpers 6 Komplikationen insbesondere hinsichtlich der Primärstabilität ergeben, so dass eine solche geschlossene Einheilung wünschenswert ist. Nach erfolgter Einheilung kann sodann die Wunde wieder geöffnet und das Plattformstück 42 aufgesetzt werden, so dass nach dieser Montage dessen Oberkante 94 zur Bildung der Auflagefläche 52 in der Art eines "tissue level" Implantats oberhalb der Gewebegrenze und somit besonders gut zugänglich positioniert ist. Das Plattformstück 42 dient somit unter anderem dazu, das ursprüngliche "bone level" Implantat 6 in ein "tissue level" Dentalimplantat 32 zu überführen.

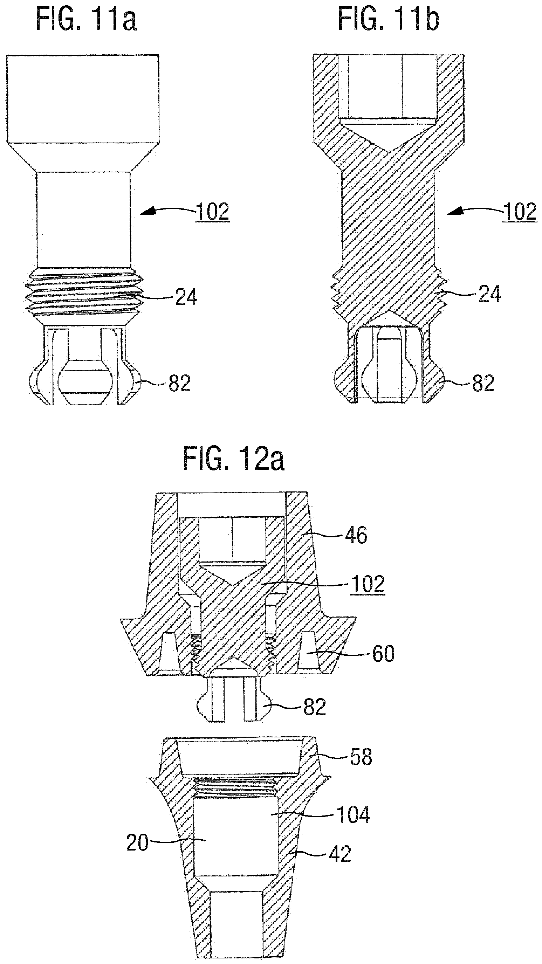

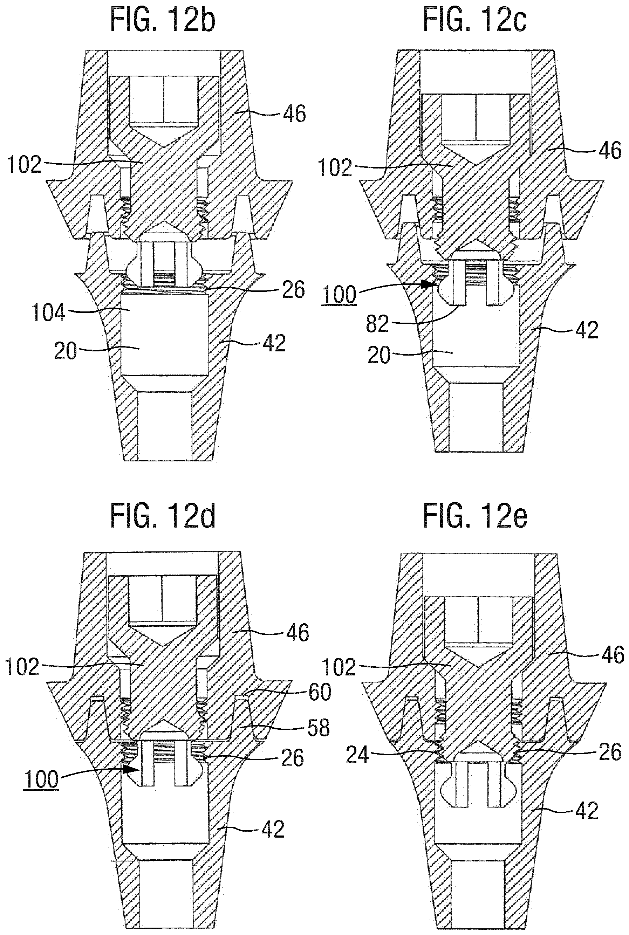

In einer alternativen, als eigenständig erfinderisch angesehenen Ausführungsform wird ein Rastsystem 100 durch eine modifizierte Verbindungsschraube 102 und entsprechend angepasst ausgeführte korrespondierende Bauteile bereitgestellt. In dieser Ausführungsform, die insbesondere für Systeme mit geringen Baubreiten und Volumenreserven vorteilhaft ist, ist die modifizierte Verbindungsschraube 102 endseitig, also "unterhalb" des Außengewindes 24, mit einer Anzahl von Schnapphaken 82 ausgeführt. Eine solche modifizierte Verbindungsschraube 102 ist in seitlicher Ansicht in Fig. 11a und im Längsschnitt in Fig. 11b gezeigt. In Fig. 12 ist für diese Ausführungsform der Montagevorgang gezeigt: in Fig. 12a werden die Komponenten Plattformstück 42, Trägerteil 46 und Verbindungsschraube 102 bereitgestellt und geeignet zueinander positioniert. Dieser Darstellung ist auch entnehmbar, dass der Aufnahmekanal 20 für die Verbindungsschraube 102 im Bereich seiner freien Mündung 104 einen sich nach innen hin aufweitenden Querschnitt aufweist. Hierdurch werden Hinterschneidungen im Mündungsbereich gebildet, in die die Schnapphaken 82 einrasten können.

Im Schritt gem. Fig. 12b werden die Komponenten geeignet zueinander ausgerichtet, so dass ein Einschieben der Verbindungsschraube 102 in den Aufnahmekanal 20 hinein möglich ist. Anschließend wird, wie in Fig. 12c gezeigt, die Verbindungsschraube 102 in den Aufnahmekanal 20 hineingeschoben, wobei die Schnapphaken 82 zunächst nach innen hin gedrückt werden, nach Passieren der freien Mündungsöffnung des Aufnahmekanals wieder nach außen ausfedern und damit in die dort gebildeten Hinterschneidungen einrasten. Im nachfolgenden in Fig. 12d gezeigten Schritt wird schließlich das Trägerteil 46 vollständig auf das Plattformstück 42 aufgesetzt, wobei die Führungsrippe 58 in die Führungsnut 60 eingreift. Im abschließenden Schritt gem. Fig. 12e wird dann die Verbindungsschraube 102 angezogen, wobei ihr Außengewinde 24 in das korrespondierende Innengewinde 26 im Plattformstück 42 eingreift und damit die Komponenten zueinander fixiert.

Zusätzlich kann bei dieser Ausführungsform auch das Trägerstück 46 mit einem Innengewinde 26 versehen sein, in die das Außengewinde 24 der Verbindungsschraube 102 während der Zwischenschritte eingreift und die Schraube somit provisorisch fixiert.

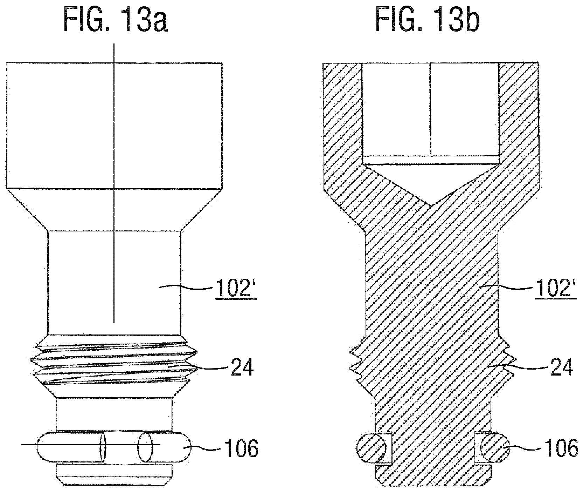

Eine alternative Ausführungsform der modifizierten Verbindungsschraube 102' ist in Fig. 13 gezeigt, nämlich in seitlicher Ansicht (Fig. 13a) und im Längsschnitt (Fig. 13b). Bei dieser Variante ist zur Bildung des Rastsystems endseitig am Schraubenschaft ein Federring 106 oder Sprengring angeordnet, der sich beim Eindringen in den Aufnahmekanal 20 nach innen hin verformt und anschließend in die Hinterschneidung einfedert.

### Bezugszeichenliste

- 1: Dental-Prothetiksystem
- 2: Dentalimplantat
- 4: prothetische Konstruktion
- 6: Implantatkörper
- 8: Außengewinde
- 10: apikales Ende
- 11: Schneidnuten
- 12: Aufbauteil
- 14: Grundkörper
- 16: Aufnahmekanal
- 18: Verbindungszapfen
- 20: Aufnahmekanal
- 22: Verbindungsschraube
- 24: Außengewinde
- 26: Innengewinde
- 28: Montagezapfen
- 30: Dental-Prothetiksystem
- 32: Dentalimplantat
- 34: prothetische Konstruktion
- 40: Verbindung
- 42: Plattformstück
- 44: Grundkörper
- 46: Trägerteil
- 48: Prothetikteil
- 50: Stirnseite
- 52: Auflagefläche
- 54: Basisfläche
- 56: Führungspaarung
- 58: Führungsrippe
- 60: Führungsnut
- 62, 64: Seitenrand
- 70: Justier-Führungspaarung
- 72: Justierkragen
- 74: Justierausnehmung
- 78: Austrittsöffnung
- 80: Rastsystem
- 82: Schnapphaken
- 84: Rastnut
- 86: Rastrille
- 88, 90: Flanke
- 92, 94: Oberkante
- 100: Rastsystem
- 102, 102': modifizierte Verbindungsschraube
- 104: Mündung
- 106: Federring

## Patentansprüche

1. Dental-Prothetiksystem (30) mit einem Dentalimplantat (32) und mit einer auf das Dentalimplantat (32) aufsetzbaren prothetischen Konstruktion (34), bei dem das Dentalimplantat (32) und die prothetische Konstruktion (34) einen zentralen Aufnahmekanal (22) für eine Verbindungsschraube aufweisen, wobei das Dentalimplantat (32) zur Anbringung der prothetischen Konstruktion (34) als Trägerfläche für die prothetische Konstruktion (34) eine Auflagefläche (52) und die prothetische Konstruktion (34) eine in ihrer Kontur an die Auflagefläche (52) angepasste Basisfläche (54) bilden, und wobei die Auflage- und die Basisfläche (52, 54) mit einer Führungspaarung (56) versehen sind, die eine an das Dentalimplantat (32) oder die prothetische Konstruktion (34) angeformte Führungsrippe (58) und eine korrespondierende, in die jeweils andere Komponente (32 bzw. 34) eingebrachte und mit dieser in Formschluss bringbare Führungsnut (60) umfasst, wobei die Führungsrippe (58) in der Art einer Ringwulst mit einer umlaufenden, in sich geschlossenen Kontur ausgeführt ist, und wobei die beiden Seitenränder (62, 64) der Führungsrippe (58) eine aneinander angepasste Kontur aufweisen, so dass die Führungsrippe (58) in Draufsicht ein umlaufendes Band mit annähernd gleichbleibender Breite bildet, **dadurch gekennzeichnet, dass** der äu-ßere Seitenrand (62) und der innere Seitenrand (64) der Führungsrippe (58) im Profil der Führungsrippe (58) gesehen nicht parallel zueinander ausgerichtet sind, optional wobei der äußere Seitenrand (62) der Führungsrippe (58) bezüglich einer Ebene senkrecht zur Längsachse des Dentalimplantats (32) um einen Flankenwinkel (α) geneigt ist, und wobei der innere Seitenrand (64) der Führungsrippe (58) bezüglich dieser Ebene um einen Flankenwinkel (β) geneigt ist.

2. Dental-Prothetiksystem (30) nach Anspruch 1,
wobei der äußere Seitenrand (62) der Führungsrippe (58) bezüglich der Längsachse des Dentalimplantats (32) um einen Winkel von 90° minus dem Flankenwinkel (α) geneigt ist, und
wobei der innere Seitenrand (64) der Führungsrippe (58) bezüglich der Längsachse des Dentalimplantats (32) um einen Winkel von 90° minus dem Flankenwinkel (β) geneigt ist.

3. Dental-Prothetiksystem (30) nach einem der Ansprüche 1 oder 2, bei dem die Führungsrippe (58) ein Rippenprofil mit unterschiedlichen Flankenwinkeln aufweist.

4. Dental-Prothetiksystem (30) nach einem der Ansprüche 1 bis 3, wobei bei auf das Dentalimplantat (32) aufgesetzter prothetischer Konstruktion (34) der äußere Seitenrand (62) und/oder der innere Seitenrand (64) der Führungsrippe (58) in Kontakt mit der jeweils zugeordneten Seitenfläche der Führungsnut (60) steht.

5. Dental-Prothetiksystem (30) nach einem der Ansprüche 1 bis 4, wobei der äußere Seitenrand (62) und der innere Seitenrand (64) der Führungsrippe (58) bezüglich der Längsachse des Dentalimplantats (32) um unterschiedliche Winkel geneigt sind.

6. Dental-Prothetiksystem (30) nach einem der Ansprüche 1 bis 5, bei dem die in der Art einer Ringwulst mit einer umlaufenden, in sich geschlossenen Kontur ausgeführte Führungsrippe (58) und entsprechend die ihr zugeordnete Führungsnut (60) bezogen auf die Längsachse des Dentalimplantats (32) eine nicht runde, vorzugsweise eine elliptische, triovale oder quadovale, Querschnittskontur bilden.

7. Dental-Prothetiksystem (30) nach einem der Ansprüche 1 bis 6, bei dem das Dentalimplantat (32) mehrteilig ausgeführt ist und einen Implantatkörper (6) sowie ein zur Herstellung der Verbindung (40) mit der prothetischen Konstruktion (34) vorgesehenes Plattformstück (42) umfasst.

8. Dental-Prothetiksystem (30) nach einem der Ansprüche 1 bis 7, bei dem die prothetische Konstruktion (34) mehrteilig ausgebildet ist und ein zur Herstellung der Verbindung (40) mit dem Dentalimplantat (32) vorgesehenes Trägerteil (46) und ein auf diesem angeordnetes, die eigentliche Prothetik bildendes Prothetikteil (48) umfasst.

9. Dental-Prothetiksystem (30) nach einem der Ansprüche 1 bis 8, bei dem die Auflage- und die Basisfläche (52, 54) mit einer Justier-Führungspaarung (70) versehen sind, die einen an eine der Flächen (52, 54) angeformten, bezüglich der Längsachse des Dentalimplantats rotationssymmetrischen Justierkragen (72) mit einer Kragenhöhe von mehr als der größten Höhe der Führungsrippe (58) und eine korrespondierende, in die jeweils andere Fläche (52, 54) eingebrachte Justiernut (74) umfasst.

10. Dental-Prothetiksystem (30) nach Anspruch 9, wobei der Justierkragen (72) bzw. die korrespondierende Justiernut (74) unmittelbar um die stirnseitige Austrittsöffnung (78) des Aufnahmekanals (22) umlaufend angeordnet ist.

11. Dental-Prothetiksystem (30) nach Anspruch 9 oder 10, dessen Justier-Führungspaarung (70) mit einem Rastsystem (80) ausgerüstet ist.

12. Dental-Prothetiksystem (30) nach einem der Ansprüche 1 bis 11, mit einer Verbindungsschraube, wobei die Verbindungsschraube, insbesondere hinsichtlich der Schraubenlänge, unter Berücksichtigung der räumlichen Abmessungen des Dentalimplantats (32) und der prothetischen Konstruktion derart dimensioniert und bemessen ist, dass ihr Schraubengewinde erst dann in ein korrespondierendes, im Dentalimplantat (32) angeordnetes Innengewinde eingreift, wenn die Führungsrippe (58) in die Führungsnut (60) eingegriffen hat.

## Claims

1. A dental prosthesis system (30) with a dental implant (32) and with a prosthetic structure (34) mountable on the dental implant (32), in which the dental implant (32) and the prosthetic structure (34) have a central receiving channel (22) for a connecting screw, wherein the dental implant (32), for mounting the prosthetic structure (34), forms a bearing face (52) as a support face for the prosthetic structure (34), and the prosthetic structure (34) forms a base face (54) adapted in terms of its contour to the bearing face (52), and wherein the bearing face and the base face (52, 54) are provided with a guide pairing (56), which comprises a guide rib (58) formed integrally on the dental implant (32) or the prosthetic structure (34) and a corresponding guide groove (60) formed in the respective other component (32 or 34) and capable of being brought into a form fit with said guide rib, wherein the guide rib (58) is embodied in the manner of an annular bead with a peripheral, closed contour, and wherein the two lateral edges (62, 64) of the guide rib (58) have a contour adapted to one another, so that the guide rib (58) in plan view forms a peripheral band of approximately uniform width, **characterised in that** the outer lateral edge (62) and the inner lateral edge (64) of the guide rib (58), as viewed in the profile of the guide rib (58), are not oriented parallel to one another, optionally wherein the outer lateral edge (62) of the guide rib (58) is inclined relative to a plane normal to the longitudinal axis of the dental implant (32) by a flank angle (α), and wherein the inner lateral edge (64) of the guide rib (58) is inclined relative to said plane by a flank angle (β) .

2. The dental prosthesis system (30) according to claim 1, wherein the outer lateral edge (62) of the guide rib (58) is inclined relative to the longitudinal axis of the dental implant (32) by an angle of 90° minus the flank angle (α), and wherein the inner lateral edge (64) of the guide rib (58) is inclined relative to the longitudinal axis of the dental implant (32) by an angle of 90° minus the flank angle (β).

3. The dental prosthesis system (30) according to either one of claims 1 or 2, in which the guide rib (58) has a rib profile with different flank angles.

4. The dental prosthesis system (30) according to any one of claims 1 to 3, wherein, when the prosthetic structure (34) is mounted on the dental implant (32), the outer lateral edge (62) and/or the inner lateral edge (64) of the guide rib (58) is in contact with the respective associated side face of the guide groove (60).

5. The dental prosthesis system (30) according to any one of claims 1 to 4, wherein the outer lateral edge (62) and the inner lateral edge (64) of the guide rib (58) are inclined relative to the longitudinal axis of the dental implant (32) by different angles.

6. The dental prosthesis system (30) according to any one of claims 1 to 5, in which the guide rib (58) embodied in the manner of an annular bead with a peripheral, closed contour and, accordingly, the guide groove (60) associated therewith, form a non-round, preferably an elliptical, tri-oval or quad-oval, cross-sectional contour, based on the longitudinal axis of the dental implant (32).

7. The dental prosthesis system (30) according to any one of claims 1 to 6, in which the dental implant (32) is of a multi-part design and comprises an implant body (6) as well as a platform part (42) provided for producing the connection (40) to the prosthetic structure (34).

8. The dental prosthesis system (30) according to any one of claims 1 to 7, in which the prosthetic structure (34) is formed in multiple parts and comprises a support part (46) provided for producing the connection (40) to the dental implant (32) and a prosthetic part (48), which is arranged on said support part and forms the actual prosthesis.

9. The dental prosthesis system (30) according to any one of claims 1 to 8, in which the bearing face and the base face (52, 54) are provided with an adjustment guide pairing (70), which comprises an adjustment collar (72) which is formed integrally on one of the faces (52, 54), which is rotationally symmetrical with respect to the longitudinal axis of the dental implant and which has a collar height larger than the largest height of the guide rib (58), as well as a corresponding adjustment groove (74) formed in the respective other face (52, 54).

10. The dental prosthesis system (30) according to claim 9, wherein the adjustment collar (72) or the corresponding adjustment groove (74) is arranged peripherally immediately around the front-side outlet opening (78) of the receiving channel (22).

11. The dental prosthesis system (30) according to claim 9 or 10, the adjustment guide pairing (70) of which is equipped with a detent system (80).

12. The dental prosthesis system (30) according to any one of claims 1 to 11, with a connecting screw, wherein the connecting screw is dimensioned and sized, in particular regarding the screw length, taking into account the spatial dimensions of the dental implant (32) and the prosthetic structure, in such a way that its screw thread will engage into a corresponding internal thread arranged in the dental implant (32) only after the guide rib (58) has engaged into the guide groove (60).

## Revendications

1. Système de prothèse dentaire (30) comprenant un implant dentaire (32) et une construction prothétique (34) pouvant être placée sur l'implant dentaire (32), dans lequel l'implant dentaire (32) et la construction prothétique (34) présentent un canal de réception central (22) pour une vis de liaison, dans lequel l'implant dentaire (32) forme une surface d'appui (52) pour poser la construction prothétique (34) en tant que surface porteuse pour la construction prothétique (34) et la construction prothétique (34) forme une surface de base (54) au contour adapté à la surface d'appui (52), et dans lequel les surfaces d'appui et de base (52, 54) sont dotées d'un couplage de guidage (56) qui comprend une nervure de guidage (58) moulée sur l'implant dentaire (32) ou la construction prothétique (34) et une rainure de guidage (60) correspondante insérée dans l'autre composante respective (32 respectivement 34) et pouvant être amenée en adhérence de formes avec celle-ci, dans lequel la nervure de guidage (58) est conçue à la manière d'un bourrelet annulaire avec un contour périphérique fermé en soi, et dans lequel les deux bords latéraux (62, 64) de la nervure de guidage (58) présentent un contour adapté l'un à l'autre de façon à ce que la nervure de guidage (58), en vue de dessus, forme une bande périphérique avec une largeur presque constante, **caractérisé en ce que** le bord latéral extérieur (62) et le bord latéral intérieur (64) de la nervure de guidage (58), vu dans le profil de la nervure de guidage (58), ne sont pas alignés parallèlement entre eux, dans lequel en option le bord latéral extérieur (62) de la nervure de guidage (58) est incliné d'un angle de flanc (α) par rapport à un plan vertical à l'axe longitudinal de l'implant dentaire (32), et dans lequel le bord latéral intérieur (64) de la nervure de guidage (58) est incliné d'un angle (β) par rapport à ce plan.

2. Système de prothèse dentaire (30) selon la revendication 1, dans lequel le bord latéral extérieur (62) de la nervure de guidage (58) est incliné d'un angle de 90° moins l'angle de flanc (α) par rapport à l'axe longitudinal de l'implant dentaire (32), et
dans lequel le bord latéral intérieur (64) de la nervure de guidage (58) est incliné d'un angle de 90° moins l'angle de flanc (β) par rapport à l'axe longitudinal de l'implant dentaire (32).

3. Système de prothèse dentaire (30) selon l'une des revendications 1 ou 2, dans lequel la nervure de guidage (58) présente un profil de nervure avec différents angles de flanc.

4. Système de prothèse dentaire (30) selon l'une des revendications 1 à 3, dans lequel en ce qui concerne la construction prothétique (34) placée sur l'implant dentaire (32), le bord latéral extérieur (62) et/ou le bord latéral intérieur (64) de la nervure de guidage (58) est en contact avec la face latérale respectivement correspondante de la rainure de guidage (60).

5. Système de prothèse dentaire (30) selon l'une des revendications 1 à 4, dans lequel le bord latéral extérieur (62) et le bord latéral intérieur (64) de la nervure de guidage (58) sont inclinés de différents angles par rapport à l'axe longitudinal de l'implant dentaire (32).

6. Système de prothèse dentaire (30) selon l'une des revendications 1 à 5, dans lequel la nervure de guidage (58) conçue à la manière d'un bourrelet annulaire avec un contour périphérique fermé en soi et par correspondance la rainure de guidage (60) qui lui est attribuée forment un contour transversal non rond, de préférence elliptique, tri-ovale ou quad-ovale par rapport à l'axe longitudinal de l'implant dentaire (32) .

7. Système de prothèse dentaire (30) selon l'une des revendications 1 à 6, dans lequel l'implant dentaire (32) est conçu en plusieurs parties et comprend un corps d'implant (6) ainsi qu'une pièce de plateforme (42) prévue pour créer la liaison (40) avec la construction prothétique (34).

8. Système de prothèse dentaire (30) selon l'une des revendications 1 à 7, dans lequel la construction prothétique (34) est conçue en plusieurs parties et comprend une partie porteuse (46) prévue pour créer la liaison (40) avec l'implant dentaire (32), et une partie prothétique (48) disposée sur celle-ci et formant la prothèse à proprement dit.

9. Système de prothèse dentaire (30) selon l'une des revendications 1 à 8, dans lequel les surfaces d'appui et de base (52, 54) sont dotées d'un couplage d'ajustement-guidage (70) qui comprend un collet d'ajustement (72) formé sur une des faces (52, 54) et symétrique en rotation par rapport à l'axe longitudinal de l'implant dentaire avec une hauteur de collet de plus de la plus grande hauteur de la nervure de guidage (58), et une rainure de guidage (74) correspondante insérée dans l'autre face (52, 54) respective.

10. Système de prothèse dentaire (30) selon la revendication 9, dans lequel le collet d'ajustement (72), respectivement la rainure de guidage (74) correspondante est disposée de manière périphérique directement autour de l'ouverture de sortie avant (78) du canal de réception (22).

11. Système de prothèse dentaire (30) selon la revendication 9 ou 10, dont le couplage d'ajustement-guidage (70) est doté d'un système d'encliquetage (80).

12. Système de prothèse dentaire (30) selon l'une des revendications 1 à 11, comprenant une vis de liaison, dans lequel la vis de liaison, en particulier au vu de la longueur de vis, est dimensionnée en tenant compte de l'encombrement spatial de l'implant dentaire (32) et de la construction prothétique de telle façon que son filet de vis ne s'engrène dans un filet femelle correspondant disposé dans l'implant dentaire (32) que lorsque la rainure de guidage (58) s'est engrenée dans la rainure de guidage (60).
